# EUROPEAN PATENT SPECIFICATION

(11) **EP 3 667 807 B1**
(45) Date of publication and mention of the grant of the patent: **28.07.2021**
(21) Application number: 20150722.5
(22) Date of filing: 27.11.2015
(51) Int. Cl.: H01M 50/10, H01M 50/409, H01M 50/463, H01M 12/08, H01M 4/86

(54) **ZINC-AIR SECONDARY BATTERY**
ZINK-LUFT-SEKUNDÄRBATTERIE
BATTERIE SECONDAIRE ZINC-AIR

(30) Priority: 02.12.2014 JP 2014243983; 24.07.2015 JP 2015147131
(43) Date of publication of application: 17.06.2020
(62) Divisional of application: 15865868.2
(73) Proprietor: NGK Insulators, Ltd., Nagoya-shi, Aichi 467-8530 (JP)
(72) Inventor: HAYASHI, Hiroshi, Aichi, 467-8530 (JP); YAMADA, Naohito, Aichi, 467-8530 (JP); KITOH, Kenshin, Aichi, 467-8530 (JP)
(74) Representative: Müller-Boré & Partner Patentanwälte PartG mbB

(56) References cited:
- WO-A1-00/41264
- WO-A1-2013/073292
- US-A- 4 585 710
- US-A1- 2008 096 074
- US-A1- 2014 315 099

## Description

The present invention relates to a zinc-air secondary battery.

One candidate of innovative batteries is a metal-air battery. In a metal-air battery, which is fed with oxygen (responsible for battery reactions) from air, the space in a battery container can be maximally filled with a negative-electrode active material. Thus, the metal-air battery can achieve high energy density in principle.

Most of currently proposed metal-air batteries are lithium-air batteries. A lithium-air battery, however, poses many technical problems, including precipitation of unwanted reaction products on the air electrode, intrusion of carbon dioxide, and the short circuit between the positive and negative electrodes caused by formation of dendritic lithium (dendrites).

Zinc-air batteries have also been known which include zinc as a negative-electrode active material. In particular, zinc-air primary batteries have already been mass-produced and widely used as power sources for, for example, hearing aids. The zinc-air battery includes an alkaline electrolytic solution (i.e., an aqueous solution of an alkali, such as potassium hydroxide) and a separator for preventing the short circuit between the positive and negative electrodes. During a discharge mode of the battery, O₂ is reduced to generate OH⁻ at the air electrode (positive electrode) and zinc is oxidized to generate ZnO at the negative electrode as illustrated in the following formulae:
Positive electrode: O₂ + 2H₂O + 4e⁻ → 4OH⁻
Negative electrode: 2Zn + 4OH⁻ → 2ZnO + 2H₂O + 4e⁻

Several attempts have been made to use a zinc-air battery as a secondary battery. Unfortunately, the battery poses a problem in that the reduction of ZnO forms zinc dendritic crystals (i.e., dendritic zinc) at the negative electrode during a charge mode, and the dendrites penetrate the separator to cause the short circuit between the negative electrode and the positive electrode. This problem precludes the practical use of a zinc-air battery as a secondary battery. The battery also poses a problem in that carbon dioxide contained in air permeates the air electrode and dissolves in the electrolytic solution, and the resultant alkali carbonate precipitates cause poor battery performance. Since a zinc-air battery is less affected by reaction than a lithium-air battery, the zinc-air battery will be put into practice as a high-capacity secondary battery by solving the problems associated with the short circuit between the positive and negative electrodes caused by dendritic zinc and the intrusion of carbon dioxide. Thus, a strong demand has arisen for a technique for preventing both the short circuit caused by dendritic zinc and the intrusion of carbon dioxide in the zinc-air secondary battery.

In order to solve such problems, Patent Document 1 (WO 2013/073292 A1) discloses a zinc-air secondary battery including a separator composed of a hydroxide-ion-conductive inorganic solid electrolyte, wherein the inorganic solid electrolyte is disposed on one surface of an air electrode. This battery can prevent both the short circuit between the positive and negative electrodes caused by dendritic zinc and the intrusion of carbon dioxide during a charge mode. This document also discloses that the inorganic solid electrolyte is desirably composed of a layered double hydroxide having a fundamental composition represented by the formula: M²⁺₁₋ₓM³⁺ₓ(OH)₂Aⁿ⁻_{x/n}·mH₂O (where M²⁺ represents a divalent cation, M³⁺ represents a trivalent cation, Aⁿ⁻ represents an n-valent anion, n is an integer of 1 or more, and x is 0.1 to 0.4).

Patent Document 1: WO 2013/073292 A1

Further, US 2008/096074 A1 discloses electrochemical air cell batteries with air flow channels. WO 00/41264 A1 discloses a reduced leakage metal-air electrochemical cell. US 4 585 710 A discloses a zinc/air cell cathode. US 2014/315099 A1 discloses a zinc secondary battery.

The present inventors have found that the use of a separator exhibiting hydroxide ion conductivity as well as water impermeability and gas impermeability can produce a highly reliable zinc-air secondary battery.

An object of the present invention is to provide a highly reliable zinc-air secondary battery including a separator exhibiting hydroxide ion conductivity as well as water impermeability and gas impermeability.

The present invention provides a zinc-air secondary battery comprising:
an air electrode serving as a positive electrode;
a negative electrode comprising zinc, a zinc alloy, and/or a zinc compound;
an aqueous electrolytic solution, the negative electrode being immersed in the aqueous electrolytic solution;
a container having an opening and accommodating the negative electrode and the electrolytic solution, wherein the container is composed of a resin; and
a separator disposed to cover the opening and having hydroxide ion conductivity, water impermeability, and gas impermeability, the separator being in contact with the electrolytic solution and defining a hermetic space with the container such that the air electrode is separated from the electrolytic solution by the separator through which hydroxide ions pass, wherein
the hermetic space has an extra space having a volume that meets a variation in amount of water in association with reaction at the negative electrode during charge and discharge of the battery, and wherein
the separator comprises an inorganic solid electrolyte.

Fig. 1 is a schematic illustration of an exemplary zinc-air secondary battery according to the present invention, the battery being in a full charge state.
Fig. 2 illustrates the discharge end state of the zinc-air secondary battery of Fig. 1.
Fig. 3 is a schematic illustration of an exemplary parallelly stacked zinc-air secondary battery according to the present invention.
Fig. 4 is a schematic cross-sectional view of a separator provided with a porous substrate in an embodiment.
Fig. 5 is a schematic cross-sectional view of a separator provided with a porous substrate in another embodiment.
Fig. 6 is a schematic illustration of a platy particle of layered double hydroxide (LDH).
Fig. 7 is a SEM image of the surface of a porous alumina substrate prepared in Example 1.
Fig. 8 is an XRD profile of a crystalline phase of a sample in Example 1.
Fig. 9 is a SEM image of a surface microstructure of a sample membrane in Example 1.
Fig. 10 is a SEM image of a microstructure at a polished cross-sectional surface of a composite material sample in Example 1.
Fig. 11A is an exploded perspective view of a system used in density evaluation test I in Example 1.
Fig. 11B is a schematic cross-sectional view of a system used in density evaluation test I in Example 1.
Fig. 12A is an exploded perspective view of a hermetic container used in density evaluation test II in Example 1.
Fig. 12B is a schematic cross-sectional view of a system used in density evaluation test II in Example 1.
Fig. 13 is a schematic cross-sectional view of an arrangement of a separator provided with a porous material and an air electrode.
Fig. 14 is a schematic cross-sectional view of another arrangement of a separator provided with a porous material and an air electrode.
Fig. 15 is a schematic cross-sectional view of an embodiment wherein a separator is disposed on an air electrode in the form of porous substrate.

### Zinc-Air Secondary Battery

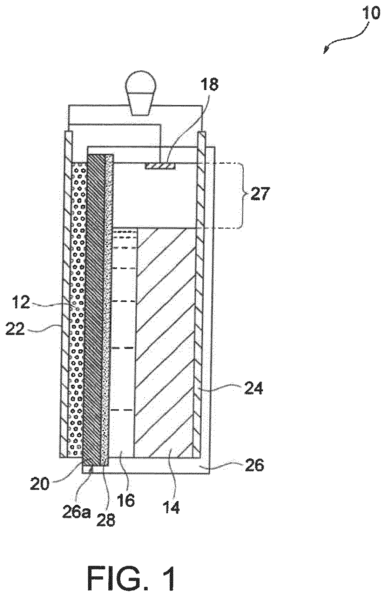

Fig. 1 is a schematic illustration of an exemplary zinc-air secondary battery of the present invention. Fig. 1 illustrates the full charge state of the zinc-air secondary battery. It should be understood that the zinc-air secondary battery of the present invention may be in a discharge end state. As illustrated in Fig. 1, the zinc-air secondary battery 10 of the present invention includes an air electrode 12, a negative electrode 14, an electrolytic solution 16, a separator 20, and a container 26. The air electrode 12 functions as a positive electrode. The negative electrode 14 contains zinc, a zinc alloy, and/or a zinc compound. The electrolytic solution 16 is an aqueous electrolytic solution in which the negative electrode 14 is immersed. The container 26 has an opening 26a and accommodates the negative electrode 14 and the electrolytic solution 16. The container 26 may optionally accommodate a third electrode 18. The separator 20 is disposed to cover the opening 26a to be in contact with the electrolytic solution 16 and to define a negative-electrode hermetic space with the container 26 such that the air electrode 12 is separated from the electrolytic solution 16 by the separator 20 through which hydroxide ions pass. A positive-electrode collector 22 may optionally be disposed on the air electrode 12. A negative-electrode collector 24 may optionally be disposed on the negative electrode 14. In such a case, the negative-electrode collector 24 may be accommodated in the container 26.

The separator 20 exhibits hydroxide ion conductivity as well as water impermeability and gas impermeability. The water impermeability and gas impermeability of the separator 20 indicates that the separator 20 has a density sufficiently high to prevent the permeation of water and gas and is not a porous film or porous material having water permeability or gas permeability. Thus, this configuration is very effective for physically inhibiting the penetration of dendritic zinc (which may be formed during a charge mode of the battery) through the separator, to prevent the short circuit between the positive and negative electrodes and to block the intrusion of carbon dioxide contained in air for preventing the precipitation of alkali carbonates (which may be caused by carbon dioxide) in the electrolytic solution. As illustrated in Fig. 1, the separator 20 may be provided with a porous substrate 28. In any case, the hydroxide ion conductivity of the separator 20 leads to efficient migration of hydroxide ions between the electrolytic solution 16 and the air electrode 12, resulting in charge/discharge reaction in the air electrode 12 and the negative electrode 14. The following reactions occur at the air electrode 12 and the negative electrode 14 during a charge mode of the battery (reverse reactions occur during a discharge mode).
Positive electrode: O₂ + 2H₂O + 4e⁻ → 4OH⁻
Negative electrode: 2Zn + 4OH⁻ → 2ZnO + 2H₂O + 4e⁻

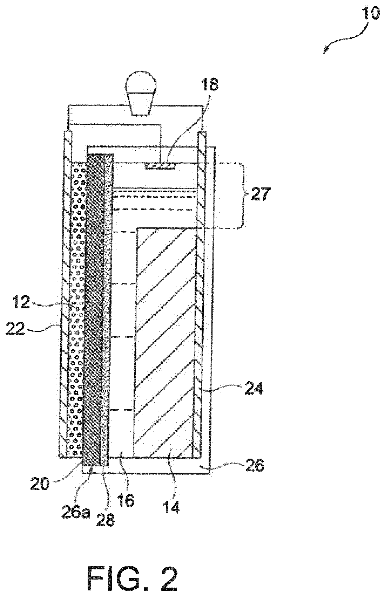

The zinc-air secondary battery 10 has an extra space 27 in the negative-electrode hermetic space. The extra space 27 has a volume that meets a variation in amount of water in association with the reaction at the negative electrode during charge/discharge of the battery. This configuration effectively prevents problems caused by a variation in amount of water in the negative-electrode hermetic space (e.g., liquid leakage and deformation of the container due to a variation in internal pressure of the container), resulting in improved reliability of the zinc-air secondary battery. As indicated by the aforementioned reaction formulae, the amount of water decreases in the negative-electrode hermetic space during a charge mode, whereas the amount of water increases in the negative-electrode hermetic space during a discharge mode. The separator 20 used in the present invention has high density and water impermeability. Hence, an increase in amount of the electrolytic solution in the negative-electrode hermetic space during discharge of the battery may cause problems, such as liquid leakage. As illustrated in Fig. 2, the negative-electrode hermetic space has the extra space 27 having a volume that meets a variation in amount of water in association with the reaction at the negative electrode during charge/discharge of the battery, and thus the extra space 27 can meet an increase in amount of the electrolytic solution 16 during a discharge mode. Since the extra space 27 serves as a buffer even in the discharge end state, an increased amount of the electrolytic solution 16 can be reliably retained in the negative-electrode hermetic space without causing overflow of the electrolytic solution. Thus, the zinc-air secondary battery has a very effective configuration for preventing both the short circuit caused by dendritic zinc and the intrusion of carbon dioxide and exhibits high reliability.

A variation in amount of water in the negative-electrode hermetic space can be determined on the basis of the aforementioned reaction formulae. The volume of the extra space 27 is preferably determined such that the negative-electrode hermetic space can be adapted to an increased amount of water and gasses (e.g., air originally contained in the negative-electrode hermetic space, and hydrogen gas generated from the negative electrode 14 by the side reaction) at an appropriate internal pressure. Also, the volume of the extra space is preferably greater than the amount of water decreased during a charge mode in the case of the battery in a discharge end state.

The zinc-air secondary battery 10 in a full charge state preferably satisfies the following conditions: the extra space 27 has a volume greater than the amount of water that will increase in association with the reaction at the negative electrode during a discharge mode; the extra space 27 is not preliminarily filled with the aqueous electrolytic solution. In contrast, the zinc-air secondary battery 10 in a discharge end state preferably satisfies the following conditions: the extra space 27 has a volume greater than the amount of water that will decrease in association with the reaction at the negative electrode during the charge mode; and the extra space 27 is preliminarily filled with an amount of the aqueous electrolytic solution that will decrease during the charge mode.

Preferably, the extra space 27 is not filled with the negative electrode. The electrolytic solution may be depleted due to a decrease in amount of water during charge of the battery in the extra space 27. Thus, the negative electrode 14 in the extra space 27 is insufficiently involved in the charge/discharge reaction, resulting in low efficiency. If the extra space 27 is not filled with the negative electrode 14, the negative electrode 14 is effectively and reliably involved in the battery reaction.

The zinc-air secondary battery of the present invention preferably has a vertical structure having a separator that is vertically disposed. The vertical disposition of the separator leads to a horizontal arrangement of the air electrode 12, the separator 20, and (the electrolytic solution 16 and negative electrode 14). If the separator 20 is vertically disposed as illustrated in Fig. 1, the negative-electrode hermetic space typically has an extra space 27 in its upper portion. If the electrolytic solution is in the form of gel, the electrolytic solution can be retained in a charge/discharge reaction region of the negative-electrode hermetic space despite a reduction in amount of the electrolytic solution. Thus, the extra space 27 may be provided in any portion other than the upper portion (e.g., a lateral or lower portion) of the negative-electrode hermetic space, resulting in a high design freedom.

Alternatively, the zinc-air secondary battery of the present invention may have a horizontal structure having a separator that is horizontally disposed. The horizontal disposition of the separator leads to a vertical arrangement of the air electrode, the separator, and (the electrolytic solution and negative electrode). If the electrolytic solution is in the form of gel, the electrolytic solution is always in contact with the separator despite a reduction in amount of the electrolytic solution. A second separator (resin separator) composed of a hygroscopic resin or a liquid-retainable resin (e.g., non-woven fabric) may be disposed between the negative electrode and the separator such that the electrolytic solution can be retained in a charge/discharge reaction portion of the positive electrode and/or the negative electrode despite a reduction in amount of the electrolytic solution. Preferred examples of the hygroscopic resin or the liquid-retainable resin include polyolefin resins. Thus, the extra space may be provided in any portion other than the upper portion (e.g., a lateral or lower portion) of the hermetic space.

### Separator

The separator 20 exhibits hydroxide ion conductivity as well as water impermeability and gas impermeability, and is typically in a plate, membrane, or layer form. The separator 20 is disposed to cover the opening 26a to be in contact with the electrolytic solution 16 and to define the negative-electrode hermetic space with the container 26 such that the air electrode 12 is separated from the electrolytic solution 16 by the separator 20 through which hydroxide ions pass.

The separator 20 is composed of an inorganic solid electrolyte exhibiting hydroxide ion conductivity. The use of the separator composed of a hydroxide-ion-conductive inorganic solid electrolyte as the separator 20 separates the electrolytic solutions between the positive and negative electrodes, and ensures conduction of hydroxide ions. The inorganic solid electrolyte constituting the separator 20 is typically a dense and hard inorganic solid electrolyte, and thus can physically inhibit the penetration of dendritic zinc (which may be formed during a charge mode of the battery) through the separator, to prevent the short circuit between the positive and negative electrodes, resulting in significantly improved reliability of the zinc-air secondary battery. The inorganic solid electrolyte is desirably densified to exhibit water impermeability. For example, the inorganic solid electrolyte has a relative density of preferably 90% or more, more preferably 92% or more, still more preferably 95% or more, as determined by the Archimedes method. The density may be any value so long as the inorganic solid electrolyte is dense and hard enough to prevent the penetration of dendritic zinc. Such a dense and hard inorganic solid electrolyte may be produced through hydrothermal treatment. Thus, a green compact which has not undergone hydrothermal treatment is not suitable as the inorganic solid electrolyte in the present invention because the compact is not dense but brittle in the solution. Any process other than hydrothermal treatment may be used for producing a dense and hard inorganic solid electrolyte.

The separator 20 or the inorganic solid electrolyte may be in the form of a composite body containing particles of an organic solid electrolyte exhibiting hydroxide ion conductivity and an auxiliary component that promotes the densification or hardening of the particles. Alternatively, the separator 20 may be in the form of a composite body containing a porous body serving as a substrate and an inorganic solid electrolyte (e.g., a layered double hydroxide) that is precipitated and grown in pores of the porous body. Examples of the materials of the porous body include ceramic materials, such as alumina and zirconia; and insulating materials, such as porous sheets composed of foamed resin or fibrous material.

The inorganic solid electrolyte preferably contains a layered double hydroxide (LDH) having a basic composition represented by the formula: M²⁺₁₋ₓM³⁺ₓ(OH)₂Aⁿ⁻_{x/n}·mH₂O (wherein M²⁺ represents a divalent cation, M³⁺ represents a trivalent cation, Aⁿ⁻ represents an n-valent anion, n is an integer of 1 or more, x is 0.1 to 0.4, and m is 0 or more). The inorganic solid electrolyte is more preferably composed of such an LDH. In the formula, M²⁺ may represent any divalent cation, and is preferably Mg²⁺, Ca²⁺ or Zn²⁺, more preferably Mg²⁺. M³⁺ may represent any trivalent cation, and is preferably Al³⁺ or Cr³⁺, more preferably Al³⁺. Aⁿ⁻ may represent any anion, and is preferably OH⁻ or CO₃²⁻. In the formula, preferably, M²⁺ comprises Mg²⁺, M³⁺ comprises Al³⁺, and Aⁿ⁻ comprises OH⁻ and/or CO₃²⁻. In the formula, n is an integer of 1 or more, preferably 1 or 2; x is 0.1 to 0.4, preferably 0.2 to 0.35; and m is 0 or more, typically a real or integer number exceeding 0 or not less than 1. In the formula, M³⁺ may be partially or entirely replaced with a cation having a valency of 4 or more. In such a case, the coefficient x/n of the anion Aⁿ⁻ in the formula may be appropriately varied.

The inorganic solid electrolyte is preferably densified through hydrothermal treatment (i.e., hydrothermally synthesized product). The hydrothermal treatment is very effective for the densification of a layered double hydroxide, in particular, an Mg-AI layered double hydroxide. The densification by the hydrothermal treatment involves, for example, a process described in Patent Document 1 (WO 2013/073292 A1), in which pure water and a green compact plate treated in a pressure container at a temperature of 120 to 250°C, preferably 180 to 250°C for 2 to 24 hours, preferably 3 to 10 hours. A more preferred process involving the hydrothermal treatment will be described below.

The inorganic solid electrolyte may be in a plate, membrane, or layer form. The inorganic solid electrolyte in a membrane or layer form is preferably disposed on or in the porous substrate. The inorganic solid electrolyte in the form of a plate has a sufficient hardness and effectively prevents the penetration of dendritic zinc. The inorganic solid electrolyte in a membrane or layer form having a thickness smaller than that of the plate is advantageous in that the electrolyte has a minimum hardness required for preventing the penetration of dendritic zinc and significantly reduces the resistance of the separator. The inorganic solid electrolyte in the form of a plate has a thickness of preferably 0.01 to 0.5 mm, more preferably 0.02 to 0.2 mm, still more preferably 0.05 to 0.1 mm. The inorganic solid electrolyte preferably exhibits a high hydroxide ion conductivity. The inorganic solid electrolyte typically exhibits a hydroxide ion conductivity of 10⁻⁴ to 10⁻¹ S/m. The inorganic solid electrolyte in a membrane or layer form has a thickness of preferably 100 µm or less, more preferably 75 µm or less, still more preferably 50 µm or less, particularly preferably 25 µm or less, most preferably 5 µm or less. Such a small thickness achieves a reduction in resistance of the separator 20. The lower limit of the thickness may vary depending on the intended use of the inorganic solid electrolyte. The thickness is preferably 1 µm or more, more preferably 2 µm or more in order to secure a hardness required for a separator membrane or layer.

A porous substrate 28 may be disposed on either or both of the surfaces, preferably on either one surface, of the separator 20. In this case, the strength imparted by the porous substrate 28 can reduce the thickness of the separator 20, resulting in a reduction in resistance. A dense membrane or layer of the inorganic solid electrolyte (preferably LDH) may be formed on or in the porous substrate 28. The disposition of the porous substrate on one surface of the separator 20 probably involves a process including preparation of the porous substrate 28 and formation of a membrane of the inorganic solid electrolyte on the porous substrate (this process will be described below).

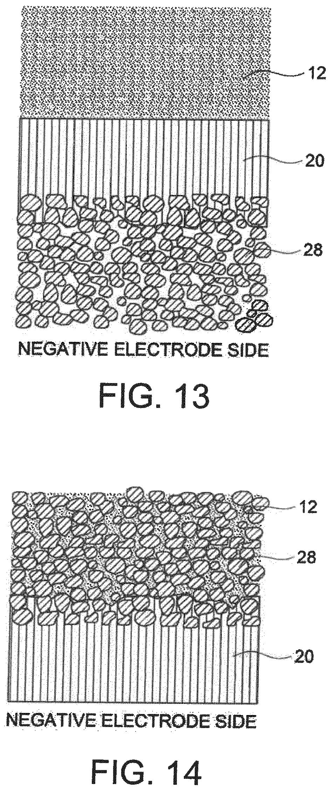

As illustrated in Fig. 13, the porous substrate 28 is preferably disposed only on one surface of the separator 20 adjacent to the negative electrode (i.e., adjacent to the electrolytic solution). In this case, the air electrode 12 can be freely formed on the separator 20 regardless of the porosity of the porous substrate 28. In this embodiment, the porous substrate 28 has water permeability and thus the electrolytic solution 16 can reach the separator 20. The presence of the porous substrate 28 contributes to more reliable retention of hydroxide ions on the separator 20. As illustrated in Fig. 14, the porous substrate 28 may be disposed adjacent to the air electrode 12 (i.e., remote from the negative electrode or the electrolytic solution). This configuration can reduce ohmic loss because of a reduction in distance between the positive and negative electrodes. With reference to Figs. 1, 13, 14 and the like, the porous substrate 28 is disposed entirely on one surface of the separator 20. Alternatively, the porous substrate 28 may be disposed only on a portion (e.g., a region responsible for charge/discharge reaction) of one surface of the separator 20. For example, the formation of a membrane or layer of the inorganic solid electrolyte on or in the porous substrate 28 typically leads to the process-derived structure; i.e., the porous substrate is disposed entirely on one surface of the separator 20. In contrast, the formation of an independent plate of the inorganic solid electrolyte (having no substrate) may involve the subsequent step of disposing the porous substrate 28 on a portion (e.g., a region responsible for charge/discharge reaction) or the entirety of one surface of the separator 20.

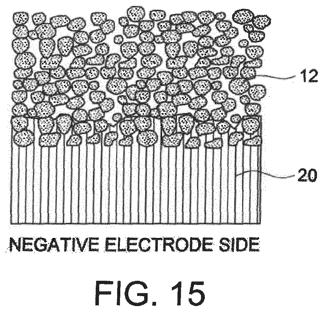

Alternatively, instead of employing the porous substrate 28, the air electrode 12 may be configured to be in the form of porous substrate as illustrated in Fig. 15. This configuration, if realized, is most ideal for achieving a spatially efficient structure without causing any disadvantage.

A liquid-retaining member composed of a hygroscopic resin or a liquid-retaining resin (e.g., non-woven fabric) may be disposed between the negative electrode 14 and the separator 20 such that the electrolytic solution 16 can be always retained in contact with the negative electrode 14 and the separator 20 despite a reduction in amount of the electrolytic solution 16. This liquid-retaining member may also serve as a liquid-retaining member for the third electrode 18. Another liquid-retaining member may be used for the separator 20. The liquid-retaining member may be a commercially available separator for a battery. Preferred examples of the hygroscopic resin or the liquid-retaining resin include polyolefin resins.

### Air Electrode

The air electrode 12 may be any known air electrode for use in a metal-air battery, such as a zinc-air battery. The air electrode 12 typically contains the air electrode catalyst, the electron-conductive material, and optionally a hydroxide-ion-conductive material. The air electrode 12 preferably contains pores capable of sufficiently delivering air required for the reaction to the air electrode catalyst. If the air electrode catalyst also serves as the electron-conductive material, the air electrode 12 may contain the air electrode catalyst also serving as the electron-conductive material and optionally the hydroxide-ion-conductive material.

The air electrode catalyst may be of any type that functions as a positive electrode in a metal-air battery and can utilize oxygen as a positive-electrode active material. Preferred examples of the air electrode catalyst include carbon materials having a redox catalytic function, such as graphite; metals having a redox catalytic function, such as platinum and nickel; and inorganic oxides having a redox catalytic function, such as perovskite oxides, manganese dioxide, nickel oxide, cobalt oxide, and spinel oxides. The air electrode catalyst may be in any form, but is preferably in a particulate form. The amount of the air electrode catalyst contained in the air electrode 12 is not particularly limited, but is preferably 5 to 70 vol.%, more preferably 5 to 60 vol.%, still more preferably 5 to 50 vol.%, relative to the total amount of the air electrode 12.

The electron-conductive material may be of any type having electrical conductivity and capable of conducting electrons between the air electrode catalyst and the separator 20 (or the intermediate layer, if applicable). Preferred examples of the electron-conductive material include carbon black materials, such as Ketjen black, acetylene black, channel black, furnace black, lamp black, and thermal black; graphites, such as natural graphite (e.g., scaly graphite), artificial graphite, and expanded graphite; electrically conductive fibers, such as carbon fiber and metal fiber; powdery metals, such as copper, silver, nickel, and aluminum; organic electron-conductive materials, such as polyphenylene derivatives; and any mixture of these materials. The electron-conductive material may be in any form, such as a particulate form. The electron-conductive material is preferably used in a form that provides a continuous phase (i.e., an electron-conductive phase) in the air electrode 12 in the thickness direction. For example, the electron-conductive material may be a porous material. Alternatively, the electron-conductive material may be a mixture or composite material with the air electrode catalyst (e.g., in the form of platinum on carbon), or may be the aforementioned air electrode catalyst also serving as an electron-conductive material (e.g., a perovskite compound containing a transition metal). The amount of the electron-conductive material contained in the air electrode 12 is not particularly limited, but is preferably 10 to 80 vol.%, more preferably 15 to 80 vol.%, still more preferably 20 to 80 vol.%, relative to the total amount of the air electrode 12.

The air electrode 12 may further contain a hydroxide-ion-conductive material as an optional component. In particular, when the separator 20 is composed of the hydroxide-ion-conductive inorganic solid electrolyte being a dense ceramic material, the air electrode 12 containing the air electrode catalyst and the electron-conductive material (i.e., traditional components) and also containing a hydroxide-ion-conductive material may be disposed on the separator 20 (or the hydroxide-ion-conductive intermediate layer disposed on the separator 20). This configuration can ensure the desired characteristics of the dense ceramic separator 20 and reduce the reaction resistance of the air electrode in the metal-air battery. If the air electrode 12 contains not only the air electrode catalyst and the electron-conductive material, but also a hydroxide-ion-conductive material, a three-phase interface composed of an electron-conductive phase (the electron-conductive material) and a gaseous phase (air) is present not only at the interface between the separator 20 (or the intermediate layer, if applicable) and the air electrode 12, but also in the air electrode 12. This leads to effective hydroxide ion conduction contributing to the battery reaction over a large surface area, resulting in reduced reaction resistance of the air electrode in the metal-air battery.

The hydroxide-ion-conductive material may be any material through which hydroxide ions can permeate. The hydroxide-ion-conductive material may be any inorganic or organic material and may be in any form. The hydroxide-ion-conductive material may be in a particulate form, or may be in the form of a coating membrane that partially or substantially entirely covers the air electrode catalyst and the electron-conductive material. Preferably, the hydroxide-ion-conductive material in the form of a coating membrane is not dense and has pores through which O₂ and H₂O can pass from the outer surface of the air electrode 12 toward the interface of the separator 20 (or the intermediate layer, if applicable). The amount of the hydroxide-ion-conductive material contained in the air electrode 12 is not particularly limited, but is preferably 0 to 95 vol.%, more preferably 5 to 85 vol.%, still more preferably 10 to 80 vol.%, relative to the total amount of the air electrode 12.

In a preferred embodiment of the present invention, the hydroxide-ion-conductive material comprises a layered double hydroxide having a fundamental composition represented by the formula: M²⁺₁₋ₓM³⁺ₓ(OH)₂Aⁿ⁻_{x/n}·mH₂O (where M²⁺ represents at least one divalent cation, M³⁺ represents at least one trivalent cation, Aⁿ⁻ represents an n-valent anion, n is an integer of 1 or more, and x is 0.1 to 0.4). In the formula, M²⁺ may represent any divalent cation, and is preferably Ni²⁺, Mg²⁺, Ca²⁺, Mn²⁺, Fe²⁺, Co²⁺, Cu²⁺, or Zn²⁺, more preferably Ni²⁺. M³⁺ may represent any trivalent cation, and is preferably Fe³⁺, Al³⁺, Co³⁺, Cr³⁺, or In³⁺, more preferably Fe³⁺. Aⁿ⁻ may represent any anion, and is preferably NO³⁻, CO₃²⁻, SO₄²⁻, OH⁻, Cl⁻, I⁻, Br, or F⁻, more preferably NO³⁻ and/or CO₃²⁻. In the formula, preferably, M²⁺ comprises Ni²⁺, M³⁺ comprises Fe³⁺, and Aⁿ⁻ comprises NO³⁻ and/or CO₃²⁻. In the formula, n is an integer of 1 or more, preferably 1 to 3; x is 0.1 to 0.4, preferably 0.2 to 0.35; and m is any real number. In another preferred embodiment of the present invention, the hydroxide-ion-conductive material may have at least one fundamental composition selected from the group consisting of hydrates of NaCo₂O₄, LaFe₃Sr₃O₁₀, Bi₄Sr₁₄Fe₂₄O₅₆, NaLaTiO₄, RbLaNb₂O₇, and KLaNb₂O₇ and Sr₄Co_{1.6}Ti_{1.4}O₈(OH)₂·xH₂O. These inorganic solid electrolytes are known as hydroxide-ion-conductive solid electrolytes for fuel cells. Such a hydroxide-ion-conductive inorganic solid electrolyte can be prepared through reduction and hydration of a dense sintered compact having the aforementioned fundamental composition.

In another preferred embodiment of the present invention, the hydroxide-ion-conductive material may contain a polymer material having hydroxide ion conductivity, or may be a mixture or composite of such a polymer material and the aforementioned layered double hydroxide. The hydroxide-ion-conductive polymer material is preferably a polymer material having a hydroxide-ion-permeable anion-exchange group. Preferred examples of the hydroxide-ion-conductive polymer material include polymer compounds; for example, hydrocarbon resins having anion-exchange groups, such as quaternary ammonium, pyridinium, imidazolium, phosphonium, and sulfonium groups (e.g., polystyrene, polysulfones, polyethersulfone, poly(ether ether ketone), polyphenylene, polybenzimidazole, polyimide, and poly(arylene ether)) and fluororesins.

The air electrode 12 may be formed by any process. For example, the air electrode 12 may be formed through the following procedure: the air electrode catalyst, the electron-conductive material, and optionally the hydroxide-ion-conductive material are wet-mixed with a solvent (e.g., ethanol), followed by drying and pulverization, and the mixture is mixed with a binder and the resultant fibrillary mixture was press-bonded to a current collector. A laminate of the air electrode 12/the current collector may be press-bonded to the separator 20 (or the intermediate layer, if applicable) so that the air electrode 12 comes into contact with the separator 20 (or the intermediate layer, if applicable). Alternatively, the air electrode 12 may be formed through the following procedure: the air electrode catalyst, the electron-conductive material, and optionally the hydroxide-ion-conductive material are wet-mixed with a solvent (e.g., ethanol), and the resultant slurry is applied to the intermediate layer and then dried.

Thus, the air electrode 12 may contain a binder. The binder may be a thermoplastic resin or a thermosetting resin. Preferred examples of the binder include polyethylene, polypropylene, polytetrafluoroethylene (PTFE), poly(vinylidene fluoride) (PVDF), styrene-butadiene rubbers (SBR), tetrafluoroethylene-hexafluoroethylene copolymers, tetrafluoroethylene -hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers, (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, carboxymethyl cellulose (CMC), methyl cellulose (MC), cellulose acetate phthalate (CAP), hydroxypropylmethyl cellulose (HPMC), hydroxypropylmethyl cellulose phthalate (HPMCP), poly(vinyl alcohol) (PVA), and mixtures of these resins.

The amount by volume of the hydroxide-ion-conductive material contained in the air electrode 12 may increase stepwise or gradually from the outer surface of the air electrode 12 toward the interface between the air electrode 12 and the separator 20 (or the intermediate layer, if applicable). With this configuration, a relatively small amount of the hydroxide-ion-conductive material leads to an increase in contact area between the air electrode catalyst and air at the outer surface of the air electrode 12, resulting in promotion of the catalytic reaction. Hydroxide ions generated by the catalytic reaction are efficiently conducted to the separator 20 because of an increase in number of conduction paths from the outer surface of the air electrode 12 toward the interface between the air electrode 12 and the separator 20 (or the intermediate layer, if applicable). The hydroxide-ion-conductive material may be in the form of particles or a coating membrane. Preferably, the hydroxide-ion-conductive material in the form of a coating membrane is not dense and has pores through which O₂ and H₂O can pass from the outer surface of the air electrode 12 toward the interface between the air electrode 12 and the separator 20 (or the intermediate layer, if applicable). The amount by volume of the hydroxide-ion-conductive material in the vicinity of the interface between the air electrode 12 and the separator 20 (or the intermediate layer, if applicable) is preferably 1.2 times or more, 1.5 times or more, 2.0 times or more, 2.5 times or more, or 3.0 times or more that of the hydroxide-ion-conductive material in the vicinity of the outer surface of the air electrode 12. Preferably, the air electrode 12 includes a first air electrode sublayer having a relatively high content of the hydroxide-ion-conductive material and a second air electrode sublayer having a relatively low content of the hydroxide-ion-conductive material such that the first air electrode sublayer is in contact with the separator 20 (or the intermediate layer, if applicable) and the second air electrode sublayer is exposed to external air. In this case, the amount by volume of the hydroxide-ion-conductive material contained in the first air electrode sublayer is preferably 1.2 times or more, 1.5 times or more, 2.0 times or more, 2.5 times or more, or 3.0 times or more that of the hydroxide-ion-conductive material contained in the second air electrode sublayer.

The air electrode 12 is preferably in the form of a layer having a thickness of 5 to 200 µm, more preferably 5 to 100 µm, still more preferably 5 to 50 µm, particularly preferably 5 to 30 µm. For example, in the case where the air electrode 12 contains the hydroxide-ion-conductive material, such a preferred thickness of the air electrode layer leads to a reduction in gas diffusion resistance and an increase in area of the three-phase interface, resulting in further reduced reaction resistance of the air electrode.

Preferably, a positive-electrode current collector 22 having gas permeability may be disposed on the surface of the air electrode 12 remote from the separator 20. The positive-electrode current collector 22 preferably has gas permeability so that air can be fed to the air electrode 12. Preferred examples of the positive-electrode current collector 22 include plates and meshes of metals, such as stainless steel, copper, and nickel; carbon paper; carbon cloth; and electron-conductive oxides. Particularly preferred is stainless steel mesh in view of corrosion resistance and gas permeability.

### Intermediate Layer

The intermediate layer may be disposed between the separator 20 and the air electrode 12. The intermediate layer may be composed of an organic or inorganic material and may have any known composition and structure that can improve the adhesion between the separator 20 and the air electrode 12 and exhibit hydroxide ion conductivity. The intermediate layer preferably comprises a polymer material and/or a ceramic material. In such a case, at least one of the polymer and ceramic materials contained in the intermediate layer may exhibit hydroxide ion conductivity.

In a preferred embodiment of the present invention, the intermediate layer may comprise a polymer material having hydroxide ion conductivity. Such a polymer material preferably contains a solid polymer electrolyte having hydroxide ion conductivity. The intermediate layer may comprise a mixture or composite of such a polymer material and a layered double hydroxide. The solid polymer electrolyte having hydroxide ion conductivity is preferably a polymer material having a hydroxide-ion-permeable anion-exchange group; for example, an ionomer resin. Examples of the ionomer resin include polymer compounds; for example, hydrocarbon resins having anion-exchange groups, such as quaternary ammonium, pyridinium, imidazolium, phosphonium, and sulfonium groups (e.g., polystyrene, polysulfones, polyethersulfone, poly(ether ether ketone), polyphenylene, polybenzimidazole, polyimide, and poly(arylene ether)) and fluororesins.

In another preferred embodiment of the present invention, the intermediate layer comprises a polymer material and a ceramic material, and the ceramic material has hydroxide ion conductivity. The intermediate layer may comprise any known ceramic material having hydroxide ion conductivity. The hydroxide-ion-conductive ceramic material preferably comprises a layered double hydroxide having a fundamental composition represented by the formula: M²⁺₁₋ₓM³⁺ₓ(OH)₂Aⁿ⁻_{x/n}·mH₂O (where M²⁺ represents at least one divalent cation, M³⁺ represents at least one trivalent cation, Aⁿ⁻ represents an n-valent anion, n is an integer of 1 or more, and x is 0.1 to 0.4). In the formula, M²⁺ may represent any divalent cation, and is preferably Ni²⁺, Mg²⁺, Ca²⁺, Mn²⁺, Fe²⁺, Co²⁺, Cu²⁺, or Zn²⁺, more preferably Ni²⁺. M³⁺ may represent any trivalent cation, and is preferably Fe³⁺, Al³⁺, Co³⁺, Cr³⁺, or In³⁺, more preferably Fe³⁺. Aⁿ⁻ may represent any anion, and is preferably NO³⁻, CO₃²⁻, SO₄²⁻, OH⁻, Cl⁻, I⁻, Br, or F⁻, more preferably NO³⁻ and/or CO₃²⁻. In the formula, preferably, M²⁺ comprises Ni²⁺, M³⁺ comprises Fe³⁺, and Aⁿ⁻ comprises NO³⁻ and/or CO₃²⁻. In the formula, n is an integer of 1 or more, preferably 1 to 3; x is 0.1 to 0.4, preferably 0.2 to 0.35; and m is any real number. In another preferred embodiment of the present invention, the hydroxide-ion-conductive material may have at least one fundamental composition selected from the group consisting of hydrates of NaCo₂O₄, LaFe₃Sr₃O₁₀, Bi₄Sr₁₄Fe₂₄O₅₆, NaLaTiO₄, RbLaNb₂O₇, and KLaNb₂O₇ and Sr₄Co_{1.6}Ti_{1.4}O₈(OH)₂·xH₂O. These inorganic solid electrolytes are known as hydroxide-ion-conductive solid electrolytes for fuel cells. Such a hydroxide-ion-conductive inorganic solid electrolyte can be prepared through reduction and hydration of a dense sintered compact having the aforementioned fundamental composition. The hydroxide-ion-conductive ceramic material may be used in combination with an organic binder (i.e., a polymer material). The organic binder may be any thermoplastic or thermosetting resin. Preferred examples of the organic binder include polyethylene, polypropylene, polytetrafluoroethylene (PTFE), poly(vinylidene fluoride) (PVDF), styrene-butadiene rubbers (SBR), tetrafluoroethylene-hexafluoroethylene copolymers, tetrafluoroethylene-hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers, (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, carboxymethyl cellulose (CMC), methyl cellulose (MC), cellulose acetate phthalate (CAP), hydroxypropylmethyl cellulose (HPMC), hydroxypropylmethyl cellulose phthalate (HPMCP), poly(vinyl alcohol) (PVA), and mixtures of these resins. The hydroxide-ion-conductive ceramic material may be used in combination with the aforementioned polymer material having hydroxide ion conductivity.

The intermediate layer may comprise a plurality of sublayers, and the sublayers may be composed of the same material or different materials. Thus, the intermediate layer may have a single-layer structure or a multilayer structure.

The intermediate layer has a thickness of preferably 1 to 200 µm, more preferably 1 to 100 µm, still more preferably 1 to 50 µm, particularly preferably 1 to 30 µm. The intermediate layer having such a thickness readily improves the adhesion between the separator 20 and the air electrode 12 and effectively reduces the resistance of the zinc-air secondary battery (in particular, the interfacial resistance between the air electrode and the separator).

### Negative Electrode

The metal negative electrode 14 contains zinc, a zinc alloy, and/or a zinc compound serving as a negative-electrode active material. The metal negative electrode 14 may be in any form; for example, in a particulate, platy, or gel form. The metal negative electrode 14 is preferably in a particulate or gel form in view of reaction rate. The particulate metal negative electrode is preferably composed of particles having a size of 30 to 350 µm. The gel-form metal negative electrode is preferably composed of a gel prepared through agitation of a mixture containing non-amalgamated zinc alloy powder having a particle size of 100 to 300 µm, an alkaline electrolytic solution, and a thickener (gelling agent). The zinc alloy may be an amalgamated or non-amalgamated alloy containing magnesium, aluminum, lithium, bismuth, indium, or lead in any amount that ensures the desired performance of the negative-electrode active material. Preferred is a non-amalgamated zinc alloy containing neither mercury nor lead. More preferred is a zinc alloy containing aluminum, bismuth, indium, or any combination thereof. Still more preferred is a non-amalgamated zinc alloy containing 50 to 1,000 ppm bismuth, 100 to 1,000 ppm indium, and 10 to 100 ppm aluminum and/or calcium. Particularly preferred is a non-amalgamated zinc alloy containing 100 to 500 ppm bismuth, 300 to 700 ppm indium, and 20 to 50 ppm aluminum and/or calcium. Preferred examples of the zinc compound include zinc oxide.

The negative-electrode current collector 24 is preferably disposed in contact with the negative electrode 14. As illustrated in Fig. 1, the negative-electrode current collector 24 may extend to the outside of the container 26 to serve as a negative-electrode terminal. Alternatively, the negative-electrode current collector 24 may be connected to a separately provided negative-electrode terminal inside or outside of the container 26. Preferred examples of the negative-electrode current collector include plates and meshes of metals, such as stainless steel, copper (e.g., punched copper sheet), and nickel; carbon paper; and oxide electrical conductors. In such a case, a mixture containing zinc oxide powder and/or zinc powder and an optional binder (e.g., particulate polytetrafluoroethylene) may be applied onto a punched copper sheet to prepare a negative electrode plate composed of the negative electrode 14 on the negative-electrode current collector 24. After the drying of the mixture, the negative electrode plate (i.e., the negative electrode 14 on the negative-electrode current collector 24) is preferably subjected to pressing for prevention of detachment of the electrode active material or an improvement in electrode density.

The electrolytic solution 16 may be of any type of aqueous electrolytic solution that is commonly used in zinc-air batteries, in particular an alkaline electrolytic solution. Examples of the electrolytic solution include aqueous alkali metal hydroxide solutions, such as aqueous potassium hydroxide solutions and aqueous sodium hydroxide solutions; and aqueous solutions containing zinc chloride or zinc perchlorate. Preferred is an aqueous alkali metal hydroxide solution (in particular, an aqueous potassium hydroxide solution). More preferred is a 6 to 9 mol/L aqueous potassium hydroxide solution. A zinc compound (e.g., zinc oxide or zinc hydroxide) may be dissolved in the electrolytic solution for preventing the self-dissolution of a zinc alloy. For example, zinc oxide may be saturated in the electrolytic solution. Alternatively, the electrolytic solution may be formed into a gel. In this case, the electrolytic solution 16 always comes into contact with the negative electrode 14, the third electrode 18, and the separator 20 regardless of a variation in amount of the electrolytic solution. The gelling agent is preferably a polymer that swells through absorption of the solvent of the electrolytic solution. Examples of the gelling agent include polymers, such as poly(ethylene oxide), poly(vinyl alcohol), and polyacrylamide; and starch.

### Container

The container 26 has the opening 26a and accommodates the negative electrode 14, the electrolytic solution 16, and the third electrode 18. The container 26 is ensured to have liquid tightness and gas tightness by hermetic sealing of the opening 26a. The hermetic container is composed of a resin, such as a polyolefin resin, an ABS resin, or a modified polyphenylene ether, more preferably an ABS resin or a modified polyphenylene ether. The separator 20 may be fixed to the container 26 by any known technique, preferably with an adhesive exhibiting resistance to the electrolytic solution 16 (especially an alkali metal hydroxide, such as potassium hydroxide). It is also preferred that the separator 20 be fixed by thermal welding to the container 26 composed of a polyolefin resin.

The container 26 is preferably configured such that the negative-electrode hermetic space has a volume that meets a variation in amount of water in association with reaction at the negative electrode during charge and discharge of the battery. As indicated by the aforementioned reaction formulae, the amount of water decreases in the negative-electrode hermetic space during a charge mode, whereas the amount of water increases in the negative-electrode hermetic space during a discharge mode. Thus, if the zinc-air secondary battery 10 is prepared in a discharge end state, an excess amount of the electrolytic solution 16 is preferably injected into the container 26 such that the amount of the electrolytic solution 16 meets the amount of water that will decrease during a charge mode.

### Third Electrode

The third electrode 18 may optionally be disposed so as to be in contact with the electrolytic solution 16 in the container 26, but not in contact with the negative electrode 14. In such a case, the third electrode 18 is connected to the air electrode 12 via an external circuit. With this configuration, hydrogen gas generated from the negative electrode 14 by the side reaction comes into contact with the third electrode 18 to produce water through the following reactions:
Third electrode: H₂ + 2OH⁻ → 2H₂O + 2e⁻
Discharge at positive electrode: O₂ + 2H₂O + 4e⁻ → 4OH⁻
In other words, hydrogen gas generated from the negative electrode 14 is absorbed by the third electrode 18, leading to self-discharge. This configuration prevents an increase in pressure in the negative-electrode hermetic space due to generation of hydrogen gas, and avoids problems caused by the increased pressure. This configuration also prevents water loss in the negative-electrode hermetic space through generation of water (which is lost through the aforementioned discharge reaction). Hydrogen gas generated from the negative electrode can be recycled to produce water in the negative-electrode hermetic space. Since the separator 20 has a dense structure, hydrogen gas that may be generated from the negative electrode 14 in the battery barely leaks to the outside. In particular, the leakage of the generated hydrogen gas is further reduced by increasing the gas tightness of the battery for reliable prevention of the intrusion of carbon dioxide. Such a problem, which can be solved by the presence of the extra space 27, is more effectively addressed by provision of the third electrode 18.

The third electrode 18 may be any electrode that is connected to the air electrode 12 via an external circuit and that can convert hydrogen gas (H₂) into water (H₂O) through the aforementioned reactions. The third electrode 18 preferably has an oxygen overvoltage higher than that of the air electrode 12. Preferably, the third electrode 18 is not involved in a common charge/discharge reaction. The third electrode 18 preferably contains platinum and/or a carbonaceous material, and more preferably contains a carbonaceous material. Preferred examples of the carbonaceous material include natural graphite, artificial graphite, hard carbon, soft carbon, carbon fiber, carbon nanotube, graphene, activated carbon, and any combination thereof. The third electrode 18 may be in any form, but is preferably in a form having a large specific surface area (e.g., in a mesh or particulate form). The third electrode 18 (preferably in a form having a large specific surface area) is more preferably coated with and/or disposed on a collector. The collector for the third electrode 18 may be in any form, but is preferably in the form of, for example, wire, punched metal, mesh, foamed metal, or any combination thereof. The collector for the third electrode 18 may be composed of the same material as the third electrode 18, or may be composed of a metal (e.g., nickel), an alloy, or any other electrically conductive material.

The third electrode 18, which is in contact with the electrolytic solution 16, is preferably disposed at a site that is not directly involved in a common charge/discharge reaction. For example, the third electrode 18 is preferably disposed in the extra space 27. In such a case, a liquid-retaining member composed of a hygroscopic resin or a liquid-retaining resin (e.g., non-woven fabric) is preferably disposed in the negative-electrode hermetic space so as to be in contact with the third electrode 18, such that the electrolytic solution 16 is always in contact with the third electrode 18 despite a reduction in amount of the electrolytic solution. The liquid-retaining member may be a commercially available battery separator. Preferred examples of the hygroscopic resin or the liquid-retaining resin include polyolefin resins. The third electrode 18 is not necessarily impregnated with a large amount of the electrolytic solution 16. The third electrode 18 moistened with a small amount of the electrolytic solution 16 exhibits a desired function. Thus, it is sufficient that the liquid-retaining member have an ability to retain such a small amount of the electrolytic solution. If the separator 20 is vertically disposed as illustrated in Fig. 1, the negative-electrode hermetic space is preferably located lateral to the separator 20, and the third electrode 18 is preferably disposed above the negative electrode 14. The third electrode 18 disposed above the negative electrode 14 is not directly involved in the normal charge/discharge reaction at the negative electrode 14, and comes into effective contact with hydrogen gas generated from the negative electrode 14 and passing through the electrolytic solution 16. If the separator is horizontally disposed, the negative-electrode hermetic space is preferably located below the separator, and the third electrode is preferably disposed above the negative electrode. The third electrode disposed above the negative electrode is not directly involved in the normal charge/discharge reaction at the negative electrode, and comes into effective contact with hydrogen gas generated from the negative electrode and passing through the electrolytic solution.

### Parallelly Stacked Zinc-Air Secondary Battery

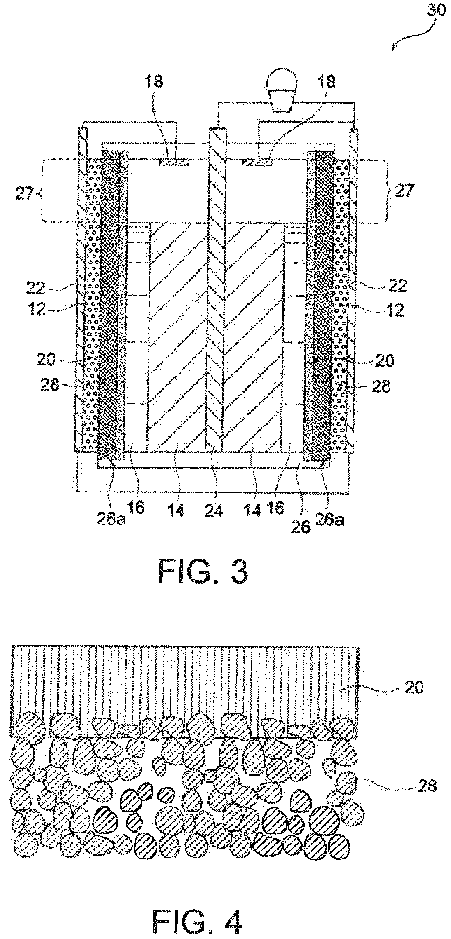

The zinc-air secondary battery 10 illustrated in Figs. 1 and 2 includes one pair of the air electrode 12 and the negative electrode 14. The zinc-air secondary battery may include two or more pairs of the air electrode 12 and the negative electrode 14 disposed in the container 26. Preferably, the air electrode 12, the negative electrode 14 (which may be disposed on both surfaces of the negative-electrode collector 24), and the air electrode 12 are disposed in this order (or this electrode arrangement is further repeated) to form a parallelly stacked zinc-air secondary battery. Fig. 3 illustrates an exemplary parallelly stacked zinc-air secondary battery. The components in the parallelly stacked zinc-air secondary battery 30 illustrated in Fig. 3 are the same as those in the zinc-air secondary battery 10 illustrated in Figs. 1 and 2, and these components are denoted by the same reference numerals as in Figs. 1 and 2. The parallelly stacked zinc-air secondary battery 30 illustrated in Fig. 3 is a battery unit including the vertical zinc-air secondary batteries 10 illustrated in Figs. 1 and 2, wherein the negative electrodes 14 are disposed on both surfaces of the negative-electrode collector 24 and the vertical zinc-air secondary batteries 10 are symmetric with respect to the negative-electrode collector 24. The third electrodes 18 are preferably disposed above the negative electrodes 14. Specifically, the parallelly stacked zinc-air secondary battery 30 includes, in sequence, an air-electrode laminate (including the positive-electrode collector 22, the air electrode 12, and the separator 20 in this order); the electrolytic solution 16; a negative-electrode laminate (including the negative electrode 14, the negative-electrode collector 24, and the negative electrode 14 in this order); the electrolytic solution 16; and an air-electrode laminate (including the separator 20, the air electrode 12, and the positive-electrode collector 22 in this order). The electrolytic solution 16 may permeate the negative-electrode laminate. Parallel stacking of a predetermined number of the battery units can produce a parallelly stacked zinc-air secondary battery including a predetermined number of air electrodes 12 and negative electrodes 14.

### LDH Separator with Porous Substrate

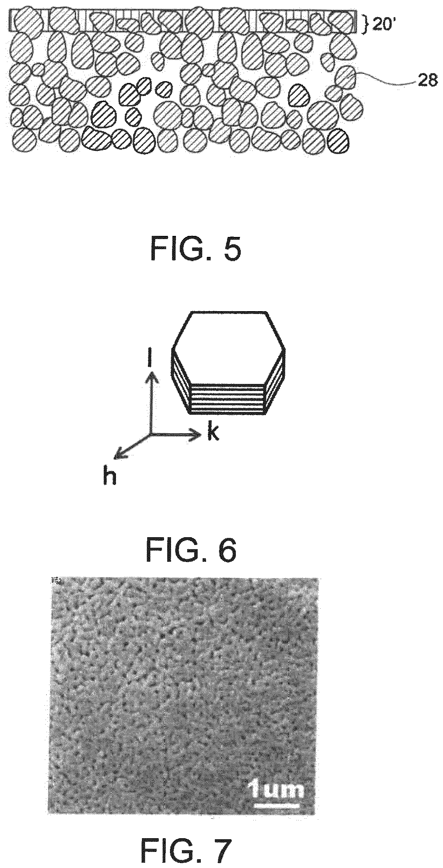

The inorganic solid electrode which constitutes the separator 20 may be in a membrane or layer form. Preferably, the inorganic solid electrode in a membrane or layer form is disposed on or in a porous substrate, to prepare a separator provided with the porous substrate. The particularly preferred separator provided with the porous substrate includes a porous substrate and a separator layer formed on and/or in the porous substrate. The separator layer contains the aforementioned layered double hydroxide (LDH). The separator layer exhibits water impermeability and gas impermeability. In other words, the porous substrate exhibits water permeability and gas permeability because of the presence of pores, and the separator layer composed of LDH exhibits high density and thus water impermeability and gas impermeability. The separator layer is preferably formed on the porous substrate. As illustrated in Fig. 4, it is preferred that the separator layer 20 in the form of an LDH dense membrane be formed on the porous substrate 28. In view of the characteristics of the porous substrate 28, LDH particles may be formed in pores in the surface and its vicinity as illustrated in Fig. 4. Alternatively, as illustrated in Fig. 5, LDH may be densely formed in the porous substrate 28 (e.g., in pores in the surface and its vicinity of the porous substrate 28) such that at least a portion of the porous substrate 28 forms the separator layer 20'. The separator illustrated in Fig. 5 has a structure prepared by removal of a portion corresponding to the membrane of the separator layer 20 of the separator illustrated in Fig. 4. The separator may have any other structure such that the separator layer is disposed parallel to the surface of the porous substrate 28. In any case, the separator layer composed of LDH is highly-densified and thus exhibits water impermeability and gas impermeability. Thus, the separator layer exhibits particular characteristics, i.e. hydroxide ion conductivity, water impermeability, and gas impermeability.

The porous substrate is preferably one on which and/or in which the LDH-containing separator layer can be formed. The porous substrate may be composed of any material and may have any porous structure. In a typical embodiment, the LDH-containing separator layer is formed on and/or in the porous substrate. Alternatively, the LDH-containing separator layer may be formed on a non-porous substrate, and then the non-porous substrate may be modified into a porous form by any known process. The porous substrate preferably has a water-permeable porous structure because such a porous structure enables an electrolytic solution to come into contact with the separator layer in the case of the use of the layer as a separator for a battery.

The porous substrate is preferably composed of at least one selected from the group consisting of ceramic materials, metal materials, and polymer materials. The porous substrate is more preferably composed of a ceramic material. Preferred examples of the ceramic material include alumina, zirconia, titania, magnesia, spinel, calcia, cordierite, zeolite, mullite, ferrite, zinc oxide, silicon carbide, and any combination thereof. More preferred are alumina, zirconia, titania, and any combination thereof. Particularly preferred are alumina and zirconia. Most preferred is alumina. The use of such a porous ceramic material facilitates the formation of a highly-densified LDH-containing separator layer. Preferred examples of the metal material include aluminum and zinc. Preferred examples of the polymer material include polystyrene, polyether sulfone, polypropylene, epoxy resins, polyphenylene sulfide, hydrophilized fluororesins (e.g., poly(tetrafluoroethylene) (PTFE)), and any combination thereof. More preferably, a material having alkali resistance (i.e., resistance to an electrolytic solution of a battery) is appropriately selected from among the preferred materials described above.

The porous substrate has an average pore size of preferably 0.001 to 1.5 µm, more preferably 0.001 to 1.25 µm, still more preferably 0.001 to 1.0 µm, particularly preferably 0.001 to 0.75 µm, most preferably 0.001 to 0.5 µm. These ranges make it possible to form a dense LDH-containing separator exhibiting water impermeability while ensuring desired water permeability in the porous substrate. In the present invention, the average pore size can be determined by measuring the largest length of each pore in an electron microscopic image of the surface of the porous substrate. The magnification of the electron microscopic image used in this measurement is 20,000 or more. All the measured pore sizes are listed in order of size to calculate the average, from which the subsequent 15 larger sizes and the subsequent 15 smaller sizes, i.e., 30 diameters in total, are selected in one field of view. The pore sizes can be measured by, for example, a length-measuring function of a SEM or image analysis software (e.g., Photoshop manufactured by Adobe).

The surface of the porous substrate has a porosity of preferably 10 to 60%, more preferably 15 to 55%, still more preferably 20 to 50%. These ranges make it possible to form a dense LDH-containing separator layer that exhibits water impermeability and gas impermeability, while ensuring desired water permeability and gas permeability of the porous substrate. The surface porosity of the porous substrate is used in the present invention because it can be readily measured by image processing described below and substantially reflects the internal porosity of the porous substrate. Thus, if the surface of the porous substrate is dense, the inside of the porous substrate is also dense. In the present invention, the porosity at the surface of the porous substrate can be measured by a method involving image processing as follows: 1) an electron microscopic (SEM) image of the surface of the porous substrate is taken at a magnification of 10,000 or more; 2) the grayscale SEM image is read with an image analysis software, such as Photoshop (manufactured by Adobe); 3) a monochromatic binary image is prepared with tools named [image], [color compensation], and [binarization] in this order; and 4) the porosity (%) is calculated by dividing the number of pixels of the black area(s) by the number of all the pixels of the image. Preferably, the porosity is measured over a 6 µm × 6 µm area of the surface of the porous substrate by image processing. More preferably, the porosities in three 6 µm × 6 µm areas selected at random are averaged for objective evaluation.

The separator layer is formed on and/or in the porous substrate, preferably on the porous substrate. For example, the separator layer 20 formed on the porous substrate 28 as illustrated in Fig. 4 is in the form of an LDH dense membrane, and the LDH dense membrane is typically composed of LDH. The separator layer 20' formed in the porous substrate 28 as illustrated in Fig. 5 is typically composed of at least a portion of the porous substrate 28 and LDH because LDH is densely formed in the porous substrate 28 (typically in pores in the surface and its vicinity of the porous substrate 28). The separator layer 20' illustrated in Fig. 5 is prepared through removal of a membrane portion of the separator layer 20 illustrated in Fig. 4 by any known technique, such as polishing or machining.

The separator layer exhibits water impermeability and gas impermeability. For example, if water is brought into contact with one surface of the separator layer at 25°C for one week, water does not permeate the separator layer, and if helium gas is fed to one surface of the separator layer under application of a differential pressure of 0.5 atm, helium gas does not permeate the separator layer. The separator layer composed of LDH has a density sufficient to exhibit water impermeability and gas impermeability. If the dense membrane has local and/or incidental defects exhibiting water permeability, the defects may be filled with an appropriate repairing agent (e.g., an epoxy resin) for ensuring water impermeability and gas impermeability. Such a repairing agent does not necessarily exhibit hydroxide ion conductivity. The surface of the separator layer (typically LDH dense membrane) has a porosity of preferably 20% or less, more preferably 15% or less, still more preferably 10% or less, particularly preferably 7% or less. A lower porosity of the surface of the separator layer indicates a higher density of the separator layer (typically LDH dense membrane). Such a high density is preferred. The surface porosity of the separator layer is used in the present invention because it can be readily measured by image processing described below and substantially reflects the internal porosity of the separator layer. Thus, if the surface of the separator layer is dense, the inside of the separator layer is also dense. In the present invention, the porosity of the surface of the separator layer can be measured by a method involving image processing as follows: 1) an electron microscopic (SEM) image of the surface of the separator layer is taken at a magnification of 10,000 or more; 2) the grayscale SEM image is read with image analysis software, such as Photoshop (manufactured by Adobe); 3) a monochromatic binary image is prepared with tools named [image], [color compensation], and [binarization] in this order; and 4) the porosity (%) is calculated by dividing the number of pixels of the black area(s) by the number of all the pixels of the image. Preferably, the porosity is measured over a 6 µm × 6 µm area of the surface of the separator layer by image processing. More preferably, the porosities in three 6 µm × 6 µm areas selected at random are averaged for objective evaluation.

The layered double hydroxide is composed of an aggregation of platy particles (i.e., platy LDH particles). Preferably, these platy particles are oriented such that the tabular faces of the platy particles are substantially perpendicular to or oblique to the surface of the porous substrate (i.e., the substrate surface). In particular, this preferred embodiment is applied to the case where the separator layer 20 is disposed in the form of an LDH dense membrane on the porous substrate 28 as illustrated in Fig. 4. Alternatively, this embodiment may be applied to the case where LDH is densely formed in the porous substrate 28 (typically in pores in the surface and its vicinity of the porous substrate 28), and the separator layer 20' is composed of at least a portion of the porous substrate 28 as illustrated in Fig. 5.

As illustrated in Fig. 6, the LDH crystal is in the form of a platy particle with a layered structure. The substantially perpendicular or oblique orientation described above is significantly beneficial for the LDH-containing separator layer (e.g., LDH dense membrane), because an oriented LDH-containing separator layer (e.g., an oriented LDH dense membrane) exhibits anisotropic hydroxide ion conductivity, i.e., hydroxide ion conductivity along the orientation of the platy LDH particles (i.e., parallel to layers of LDH) is much greater than that perpendicular to the orientation of the platy LDH particles in the oriented LDH membrane. In fact, the inventors have revealed that the hydroxide ion conductivity (S/cm) along the orientation of LDH particles in an oriented LDH bulk body is an order of magnitude greater than the hydroxide ion conductivity (S/cm) perpendicular to the orientation of LDH particles. Thus, the substantially perpendicular or oblique orientation in the LDH-containing separator layer according to the present invention fully or significantly leads to the anisotropic hydroxide ion conductivity of the oriented LDH to the thickness direction of the layer (i.e., the direction perpendicular to the surface of the separator layer or the surface of the porous substrate), whereby the conductivity in the thickness direction can be maximally or significantly increased. In addition, the LDH-containing separator layer has a layered structure and thus exhibits lower resistance than an LDH bulk block. The LDH-containing separator layer having such an orientation readily conducts hydroxide ions in the thickness direction of the layer. Because of its high density, the LDH-containing separator layer is very suitable for use as a separator that requires high conductivity across the thickness of the layer and high density.

In a particularly preferred embodiment, the LDH-containing separator layer (typically LDH dense membrane) is composed of the platy LDH particles highly oriented in the substantially perpendicular direction. If the platy LDH particles are highly orientated in the substantially perpendicular direction, the X-ray diffractometry of the surface of the separator layer shows substantially no peak of (003) plane or a peak of (003) plane smaller than that of (012) plane (note: this shall not apply to the case where the porous substrate shows a peak at the same angle as the peak of (012) plane of the platy LDH particles, because the peak of (012) plane of the platy LDH particles cannot be specified). This characteristic peak profile indicates that the platy LDH particles of the separator layer are oriented substantially perpendicular to (i.e, perpendicular to or nearly perpendicular to, and preferably perpendicular to) the separator layer. The peak of (003) plane is strongest among peaks observed by X-ray diffractometry of non-oriented LDH powder. In contrast, the oriented LDH-containing separator layer shows substantially no peak of (003) plane or the peak of (003) plane smaller than the peak of (012) plane because platy LDH particles are oriented substantially perpendicular to the separator layer. The reason for this is as follows: The c planes (001) including the (003) plane (where I is 3 or 6) are parallel to the layers of platy LDH particles. If the platy LDH particles are oriented substantially perpendicular to the separator layer, the layers of platy LDH particles are also substantially perpendicular to the separator layer and thus the X-ray diffractometry of the surface of the separator layer shows no peak or very small peak of (001) plane (where I is 3 or 6). The peak of (003) plane, if present, tends to be stronger than the peak of (006) plane, and the use of the peak of (003) plane facilitates determination of the substantially perpendicular orientation as compared with the use of the peak of (006) plane. Thus, the oriented LDH-containing separator layer preferably shows substantially no peak of (003) plane or shows the peak of (003) plane smaller than the peak of (012) plane, which indicates that the highly perpendicular orientation is achieved.

The separator layer has a thickness of preferably 100 µm or less, more preferably 75 µm or less, still more preferably 50 µm or less, particularly preferably 25 µm or less, most preferably 5 µm or less. Such a small thickness leads to a reduction in resistance of the separator. The separator layer is preferably formed as an LDH dense membrane on the porous substrate. In this case, the thickness of the separator layer corresponds to the thickness of the LDH dense membrane. If the separator layer is formed in the porous substrate, the thickness of the separator layer corresponds to the thickness of a composite layer composed of LDH and at least a portion of the porous substrate. If the separator layer is formed on and in the porous substrate, the thickness of the separator layer corresponds to the total thickness of the LDH dense membrane and the composite layer. The separator layer having the above thickness exhibits a low resistance suitable for use in, for example, a battery. The lower limit of the thickness of the oriented LDH membrane, which may vary with the intended use of the membrane, may be any value. In order to ensure the hardness desirable for use in a functional membrane, such as a separator, the thickness is preferably 1 µm or more, more preferably 2 µm or more.

The LDH separator provided with the porous substrate is produced through a method involving (1) providing a porous substrate, (2) immersing the porous substrate in an aqueous stock solution containing magnesium ions (Mg²⁺) and aluminum ions (Al³⁺) in a total concentration of 0.20 to 0.40 mol/L and further containing urea, and (3) hydrothermally treating the porous substrate in the aqueous stock solution, to form a separator layer containing a layered double hydroxide on and/or in the porous substrate.

### (1) Provision of Porous Substrate

As described above, the porous substrate is preferably composed of at least one selected from the group consisting of ceramic materials, metal materials, and polymer materials. The porous substrate is more preferably composed of a ceramic material. Preferred examples of the ceramic material include alumina, zirconia, titania, magnesia, spinel, calcia, cordierite, zeolite, mullite, ferrite, zinc oxide, silicon carbide, and any combination thereof. More preferred are alumina, zirconia, titania, and any combination thereof. Particularly preferred are alumina and zirconia. Most preferred is alumina. The use of such a porous ceramic material facilitates the formation of a highly-densified LDH-containing separator layer. In the case of a ceramic porous substrate, the porous substrate is preferably subjected to, for example, ultrasonic cleaning or cleaning with ion-exchange water.

In the case of a polymer porous substrate, the surfaces of the polymer are preferably anionized in advance. The anionized surface facilitates the nucleation of LDH at its anionic groups and also facilitates growth and the substantially perpendicular orientation of platy LDH particles in subsequent steps. The polymer substrate having anionized surfaces can be prepared by anionizing an anionizable polymer substrate by any known method. Anionization is performed preferably by imparting at least one of SO₃⁻ (sulfonation), OH⁻ (hydroxylation) and CO₂⁻ (carboxylation), which can be an anion in LDH, to the surface of a polymer substrate. Sulfonation is more preferred. The anionizable polymer substrate preferably has alkali resistance, i.e., resistance to an electrolyte solution of a battery. The anionizable polymer substrate is preferably composed of at least one selected from the group consisting of polystyrene, polyether sulfone, polypropylene, epoxy resins, and polyphenylene sulfide, which are particularly suitable for sulfonation. Aromatic polymer substrates are particularly preferred because they are readily anionized (particularly, sulfonated). Examples of the aromatic polymer substrates include substrates composed of at least one selected from the group consisting of polystyrene, polyether sulfone, polypropylene, an epoxy resin, and polyphenylene sulfide. Most preferably, the aromatic polymer substrate is composed of polystyrene. The sulfonation may be performed by soaking a sulfonatable polymer substrate in an acid for sulfonating the sulfonatable polymer substrate, such as sulfuric acid (e.g., concentrated sulfuric acid), fuming sulfuric acid, chlorosulfuric acid, and sulfuric anhydride. Any other sulfonation techniques may also be used. The soaking in an acid for the sulfonation may be performed at room temperature or high temperature (e.g., 50 to 150°C). The sulfonated aromatic polymer substrate shows a transmittance ratio T₁₆₀₁/T₁₁₂₇ of preferably not less than 0.920, more preferably not less than 0.930, and more preferably not less than 0.940, where the ratio T₁₆₀₁/T₁₁₂₇ is calculated by dividing the transmittance at 1601 cm⁻¹ (i.e., T₁₆₀₁) assigned to C=C stretching vibration of the phenyl group by the transmittance at 1127 cm⁻¹ (i.e., T₁₁₂₇) assigned to the sulfonate group in the transmittance spectrum of the sulfonated surface of the aromatic polymer substrate measured by attenuated total reflection (ATR) of Fourier transform infrared spectroscopy (FT-IR) on the surface. In the transmittance spectrum, the absorption peak at 1601 cm⁻¹ is assigned to C=C stretching vibration of the phenyl group, and thus the transmittance T₁₆₀₁ always has the same value, regardless of the presence or absence of the sulfonate group. In contrast, the absorption peak at 1127 cm⁻¹ is assigned to the sulfonate group, and thus the transmittance T₁₁₂₇ has a lower value when the density of the sulfuric acid is higher. Thus, a higher T₁₆₀₁/T₁₁₂₇ indicates that more sulfonate groups are densely present on the surface of the polymer substrate, and also indicates that nuclei of LDH that has taken the sulfonate groups as anions of an intermediate layer can be densely formed, which contributes formation of the highly-densified LDH-containing functional layer. The ratio T₁₆₀₁/T₁₁₂₇ can have the above-mentioned value by adjusting the soaking time in an acid for the sulfonation of the polymer substrate. For example, in the case of using concentrated sulfuric acid in the sulfonation, the soaking time is preferably not less than 6 days, and more preferably not less than 12 days. The anionized polymer substrate described above is preferably cleaned with ion-exchanged water and then dried at room temperature or high temperature (e.g., 30 to 50°C).

### (2) Immersion in Aqueous Stock Solution

The porous substrate is then immersed in the aqueous stock solution in a desired direction (e.g., horizontally or perpendicularly). For horizontal retention of the porous substrate, the porous substrate may be hanged up in or suspended in a container of the aqueous stock solution, or placed on the bottom of the container. For example, the porous substrate may be immobilized and suspended in the stock solution and away from the bottom of the container. For perpendicular retention of the porous substrate, a jig may be disposed that can hold the porous substrate perpendicularly to the bottom of the container. In any case, a preferred configuration or arrangement is one that can achieve growth of LDH substantially perpendicular to the porous substrate (i.e., growth of LDH such that the tabular faces of platy LDH particles are substantially perpendicular to or oblique to the surface of the porous substrate). The aqueous stock solution contains magnesium ions (Mg²⁺) and aluminum ions (Al³⁺) in a specific total concentration and further contains urea. Urea is hydrolyzed into ammonia and raises the pH of the aqueous stock solution, and metal ions co-existing in the aqueous stock solution form hydroxides, to produce LDH. The hydrolysis of urea, which also generates carbon dioxide, can form LDH having carbonate ions as anions. The aqueous stock solution contains magnesium ions (Mg²⁺) and aluminum ions (Al³⁺) in a total concentration of preferably 0.20 to 0.40 mol/L, more preferably 0.22 to 0.38 mol/L, still more preferably 0.24 to 0.36 mol/L, particularly preferably 0.26 to 0.34 mol/L. Such a preferred concentration range facilitates the nucleation and the crystal growth in a well-balanced manner and can form a highly-oriented, highly-densified LDH membrane. At a low total concentration of magnesium ions and aluminum ions, the crystal growth presumably dominates over the nucleation, resulting in a decrease in the number of LDH particles and an increase in size of the LDH particles. At a high total concentration, the nucleation presumably dominates over the crystal growth, resulting in an increase in the number of LDH particles and a decrease in size of the LDH particles.

Preferably, the aqueous stock solution contains dissolved magnesium nitrate and aluminum nitrate; i.e., the aqueous stock solution contains nitrate ions besides magnesium ions and aluminum ions. In this case, the molar ratio of the urea to the nitrate ions (NO₃⁻) (i.e., urea/NO₃⁻) in the aqueous stock solution is preferably 2 to 6, more preferably 4 to 5.

### (3) Formation of LDH-Containing Separator Layer through Hydrothermal Treatment

The porous substrate is hydrothermally treated in the aqueous stock solution to form the LDH-containing separator layer on and/or in the porous substrate. The hydrothermal treatment is performed in a hermetic container at a temperature of preferably 60 to 150°C, more preferably 65 to 120°C, still more preferably 65 to 100°C, particularly preferably 70 to 90°C. The hydrothermal treatment temperature may have any upper limit without causing thermal deformation of the porous substrate (e.g., a polymer substrate). The temperature can be elevated at any rate in the hydrothermal treatment. The temperature elevation rate may be 10 to 200°C/h, and preferably 100 to 200°C/h, more preferably 100 to 150°C/h. The time for the hydrothermal treatment may be determined depending on the target density or thickness of the LDH membrane.

After the hydrothermal treatment, the porous substrate is removed from the hermetic container, and then preferably cleaned with ion-exchange water.

The LDH-containing separator layer in the LDH-containing composite material produced as described above is composed of densely assembled platy LDH particles that are oriented in the substantially perpendicular direction, which is beneficial for the conductivity. Thus, the LDH-containing separator layer is very suitable for use in a zinc-air secondary battery that has suffered from growth of dendritic zinc which is an obstacle to practical use of this battery.

The above-described method may form LDH-containing separator layers on the two surfaces of the porous substrate. Thus, in order to modify the LDH-containing composite material into a form suitable for use as a separator, the LDH-containing separator layer on one surface of the porous substrate is preferably removed through mechanical scraping after the formation of the separator layers. Alternatively, it is desirable to take a measure to prevent formation of the LDH-containing separator layer on one surface of the porous substrate in advance.

### Production Method of LDH Dense Plate

Preferred embodiments of the inorganic solid electrolyte in a plate form include a layered double hydroxide (LDH) dense body. The LDH dense body of the present invention may be prepared by any method, and one preferable embodiment of the production method is described below. This production method is performed by compacting and firing a raw material powder of an LDH represented by hydrotalcite to obtain an oxide fired body, allowing the oxide fired body to reproduce the layered double hydroxide, and then removing excessive water. According to this method, a high-grade layered double hydroxide dense body having a relative density of 88% or greater can be provided and produced in a simple and stable manner.

### (1) Provision of Raw Material Powder

A powder of a layered double hydroxide represented by general formula: M²⁺₁₋ₓM³⁺ₓ(OH)₂Aⁿ⁻_{x/n}·MH₂O (wherein M²⁺ is a divalent cation, M³⁺ is a trivalent cation, Aⁿ⁻ is an anion having a valency of n, n is an integer of 1 or greater, x is 0.1 to 0.4, and m is 0 or more) is provided as a raw material powder. In the general formula above, M²⁺ may be any divalent cation, and preferable examples include Mg²⁺, Ca²⁺, and Zn²⁺, with Mg²⁺ being more preferable. M³⁺ may be any trivalent cation, and preferable examples include Al³⁺ and Cr³⁺, with Al³⁺ being more preferable. Aⁿ⁻ may be any anion, and preferable examples include OH⁻ and CO₃²⁻. Accordingly, it is preferable that in the general formula above, at least M²⁺ comprises Mg²⁺, M³⁺ comprises Al³⁺, and Aⁿ⁻ comprises OH⁻ and/or CO₃²⁻. The value of n is an integer of 1 or greater and is preferably 1 or 2. The value of x is 0.1 to 0.4 and is preferably 0.2 to 0.35. Such a raw material powder may be a commercially available layered double hydroxide product or may be a raw material prepared by a known method such as liquid phase synthesis technique using nitrate or chloride. The particle size of the raw material powder is not limited as long as the desired layered double hydroxide dense body can be obtained, and the volume-based D50 average particle diameter is preferably 0.1 to 1.0 µm and more preferably 0.3 to 0.8 µm. This is because an excessively small particle diameter of the raw material powder is likely to result in aggregation of the powder, and it is highly possible that pores remain during compaction, while an excessively large particle diameter results in poor compactability.

Optionally, the raw material powder may be calcined to obtain an oxide powder. Although the calcination temperature at this stage is slightly different depending on the constituting M²⁺ and M³⁺, the calcination temperature is preferably 500°C or less and more preferably 380 to 460°C, and calcination is performed in such a range that the particle diameter of the raw material does not largely change.

### (2) Preparation of Compact

The raw material powder is compacted to obtain a compact. It is preferable that this compaction is performed by, for example, pressing such that the compact after compaction and before firing (hereinafter referred to as a compact) has a relative density of 43 to 65%, more preferably 45 to 60%, and even more preferably 47% to 58%. The relative density of the compact can be determined by calculating the density from the size and weight of the compact and dividing the density by the theoretical density, but since the weight of a compact is affected by adsorbed water, it is preferable to measure the relative density of a compact made from a raw material powder that has been stored for 24 hours or longer in a desiccator at room temperature at a relative humidity of 20% or less, or measure the relative density after storing the compact under the foregoing conditions, in order to obtain a precise value. When a raw material powder that has been calcined to form an oxide powder is used, the relative density of the compact is preferably 26 to 40% and more preferably 29 to 36%. In the case of using the oxide powder, the relative density was determined by using a calculated density obtained in terms of a mixture of oxides as a denominator, assuming that the metal elements constituting the layered double hydroxide had changed to their respective oxides due to calcination. Pressing, which is cited as an example, may be performed by metal-mold uniaxial pressing or may be performed by cold isostatic pressing (CIP). In the case of cold isostatic pressing (CIP), it is preferable to use a raw material powder that has been placed in a rubber container and vacuum-sealed or that has preliminarily compacted. In addition, the raw material powder may be compacted by a known method such as slip casting or extrusion molding, and the compacting method is not particularly limited. When a raw material powder that has been calcined to form an oxide powder is used, the compacting method is limited to dry compaction. The relative density of a compact from these methods influences not only the strength of the resulting dense body but also the degree of orientation of layered double hydroxide particles that usually have a plate shape, and it is therefore preferable to suitably adjust the relative density within the aforementioned range at the stage of compaction in consideration of, for example, the application thereof.

### (3) Firing Step

The compact obtained in the foregoing step is fired to obtain an oxide fired body. It is preferable that this firing is performed such that the oxide fired body has a weight that is 57 to 65% of the weight of the compact and/or a volume that is 70 to 76% of the volume of the compact. When the weight is no less than 57% of the weight of the compact, a heterogeneous phase, from which a layered double hydroxide cannot be reproduced, is unlikely to be produced at the stage of reproduction of the layered double hydroxide, which is a subsequent step, and when the weight is no greater than 65%, firing is sufficient, and sufficient densification is achieved in a subsequent step. Also, when the volume is no less than 70% of the volume of the compact, neither a heterogeneous phase nor cracks are likely to appear at the stage of reproducing a layered double hydroxide, which is a subsequent step, and when the volume is no greater than 76%, firing is sufficient, and sufficient densification is achieved in a subsequent step. When the raw material powder that has been calcined to form an oxide powder is used, it is preferable to obtain an oxide fired body having a weight that is 85 to 95% of the weight of the compact and/or a volume that is no less than 90% of the volume of the compact. Irrespective of whether the raw material powder is calcined or not, it is preferable that firing is performed such that the oxide fired body has a relative density of 20 to 40% in terms of oxide, more preferably 20 to 35%, and even more preferably 20 to 30%. The relative density in terms of oxide is determined by using a calculated density obtained in terms of a mixture of oxides as a denominator, assuming that the metal elements constituting the layered double hydroxide have changed to their respective oxides due to firing. A preferable firing temperature for obtaining an oxide fired body is 400 to 850°C, and more preferably 700 to 800°C. It is preferable that the compact is retained at a firing temperature within this range for 1 hour or longer, and a more preferable retention time is 3 to 10 hours. In order to prevent the compact from cracking due to the release of water and carbon dioxide caused by rapid temperature increase, it is preferable to increase the temperature to the aforementioned firing temperature at a rate of 100°C/h or less, more preferably 5 to 75°C/h, and even more preferably 10 to 50°C/h. Accordingly, it is preferable to secure an overall firing time from temperature increase to temperature decrease (100°C or less) of 20 hours or longer, more preferably 30 to 70 hours, and even more preferably 35 to 65 hours.

### (4) Reproduction Step for Reproducing Layered Double Hydroxide

The oxide fired body obtained in the foregoing step is retained in or immediately above an aqueous solution comprising the above-described anion having a valency of n (Aⁿ⁻) to reproduce a layered double hydroxide, thereby providing a water-rich layered double hydroxide solidified body. That is, the layered double hydroxide solidified body obtained by this production method inevitably contains excessive water. The anion contained in the aqueous solution may be the same anion as the anion contained in the raw material powder or may be a different anion. The retention of the oxide fired body in or immediately above the aqueous solution is preferably performed by a procedure of hydrothermal synthesis in a closed vessel, and an example of such a closed vessel is a closed vessel made from Teflon (registered trademark), more preferably a closed vessel equipped with a jacket made from stainless steel or the like. It is preferable that the formation of a layered double hydroxide is performed by retaining the oxide fired body at a temperature of 20°C or greater and less than 200°C in a state in which at least one surface of the oxide fired body is in contact with the aqueous solution, a more preferable temperature is 50 to 180°C, and an even more preferable temperature is 100 to 150°C. The oxide sintered body is retained at such a layered double hydroxide formation temperature preferably for 1 hour or longer, more preferably for 2 to 50 hours, and even more preferably for 5 to 20 hours. Such a retention time makes it possible to promote sufficient reproduction of a layered double hydroxide and avoid or reduce a remaining heterogeneous phase. An excessively long retention time does not result in any particular problem, and the retention time is suitably set in view of efficiency.

When carbon dioxide (carbonate ions) in air is intended to be used as the anionic species of the aqueous solution comprising an anion having a valency of n used for the reproduction of a layered double hydroxide, it is possible to use ion exchanged water. When performing hydrothermal treatment in a closed vessel, the oxide fired body may be immersed in the aqueous solution, or treatment may be performed in such a state that at least one surface is in contact with the aqueous solution by using a jig. In the case where treatment is performed in a state in which at least one surface is in contact with the aqueous solution, the amount of excessive water is smaller than the amount required for complete immersion, and therefore the subsequent step may be performed in a shorter period of time. However, an excessively small amount of the aqueous solution is likely to result in cracks, and it is preferable to use water in an amount greater than or equal to the weight of the fired body.

### (5) Dehydration Step

Excessive water is removed from the water-rich layered double hydroxide solidified body obtained in the foregoing step. In this way, the layered double hydroxide dense body of the present invention is obtained. It is preferable that this step of removing excessive water is performed in an environment having a temperature of 300°C or less and an estimated relative humidity at the maximum temperature in the removal step of 25% or greater. In order to prevent rapid evaporation of water from the layered double hydroxide solidified body, it is preferable to charge the solidified body again into the closed vessel used in the reproduction step for reproducing the layered double hydroxide and remove water, in the case of dehydration at a temperature higher than room temperature. A preferable temperature in this case is 50 to 250°C and more preferably 100 to 200°C. A more preferable relative humidity at the stage of dehydration is 25 to 70% and even more preferably 40 to 60%. Dehydration may be performed at room temperature, and there is no problem as long as the relative humidity in this case is within the range of 40 to 70% in an ordinary indoor environment.

### EXAMPLES

The present invention will now be described in more detail by way of Examples.

### Example 1: Preparation and Evaluation of LDH Separator with Porous Substrate

### (1) Preparation of Porous Substrate

Boehmite (DISPAL 18N4-80, manufactured by Sasol Limited), methyl cellulose, and ion-exchange water were weighed in proportions by mass of 10:1:5, and were then kneaded together. The kneaded product was subjected to extrusion molding with a hand press into a plate having a size sufficiently exceeding 5 cm × 8 cm and a thickness of 0.5 cm. The resultant green body was dried at 80°C for 12 hours and then fired at 1,150°C for three hours, to prepare an alumina porous substrate. The porous substrate was cut into a piece of 5 cm × 8 cm.

The porosity at the surface of the resultant porous substrate was determined by a method involving image processing. The porosity was 24.6%. The porosity was determined as follows: 1) a scanning electron microscopic (SEM) image of the surface microstructure of the porous substrate was taken with a scanning electron microscope (SEM; JSM-6610LV, manufactured by JEOL Ltd.) (magnification: 10,000 or more) at an acceleration voltage of 10 to 20 kV; 2) the grayscale SEM image was read with image analysis software, such as Photoshop (manufactured by Adobe); 3) a monochromatic binary image was prepared by using tools named [image], [color compensation], and [binarization] in this order; and 4) the porosity (%) was determined by dividing the number of pixels of the black areas by the number of all the pixels of the image. The porosity was determined over a 6 µm × 6 µm area of the surface of the porous substrate. Fig. 7 illustrates the SEM image of the surface of the porous substrate.

The average pore size of the porous substrate was about 0.1 µm. In the present invention, the average pore size was determined by measuring the largest length of each pore in a scanning electron microscopic (SEM) image of the surface of the porous substrate. The magnification of the scanning electron microscopic (SEM) image used in this measurement was 20,000. All the measured pore sizes were listed in order of size to calculate the average, from which the subsequent 15 larger sizes and the subsequent 15 smaller sizes, i.e., 30 sizes in total, were selected in one field of view. The selected sizes of two fields of view are then averaged to yield the average pore size. The pore sizes were measured by, for example, a length-measuring function of SEM software.

### (2) Cleaning of Porous Substrate

The resultant porous substrate was ultrasonically cleaned in acetone for five minutes, in ethanol for two minutes, and then in ion-exchange water for one minute.

### (3) Preparation of Aqueous Stock Solution

Magnesium nitrate hexahydrate (Mg(NO₃)₂·6H₂O, manufactured by KANTO CHEMICAL Co., Inc.), aluminum nitrate nonahydrate (Al(NO₃)₃·9H₂O, manufactured by KANTO CHEMICAL Co., Inc.), and urea ((NH₂)₂CO, manufactured by Sigma-Aldrich Corporation) were provided as raw materials for an aqueous stock solution. Magnesium nitrate hexahydrate and aluminum nitrate nonahydrate were weighed and placed in a beaker, and then ion-exchange water was added to the beaker to achieve a total volume of 600 mL, a ratio of the cations (Mg²⁺/Al³⁺) of 2, and a molar concentration of the total metal ions (i.e., Mg²⁺ and Al³⁺) of 0.320 mol/L. The resultant solution was agitated and urea was then added to the solution. The added urea was weighed in advance to give a urea/NO₃⁻ ratio of 4. The resultant solution was further agitated to prepare an aqueous stock solution.

### (4) Formation of Membrane by Hydrothermal Treatment

The aqueous stock solution prepared in the above procedure (3) and the porous substrate cleaned in the above procedure (2) were enclosed together in a hermetic Teflon container (with an internal volume of 800 mL and a stainless steel jacket). The porous substrate was horizontally suspended and away from the bottom of the hermetic Teflon container such that the opposite surfaces of the porous substrate came into contact with the aqueous stock solution. Thereafter, the porous substrate was subjected to hydrothermal treatment at a hydrothermal temperature of 70°C for 168 hours (7 days), to form oriented layered double hydroxide membranes (separator layers) on the surfaces of the substrate. After the elapse of a predetermined period of time, the porous substrate was removed from the hermetic container, cleaned with ion-exchange water, and then dried at 70°C for 10 hours, to form a dense membrane of the layered double hydroxide (LDH) on the porous substrate (hereinafter the dense membrane will be referred to as "membrane sample"). The thickness of the membrane sample was about 1.5 µm. A Layered double hydroxide-containing composite material sample (hereinafter referred to as "composite material sample") was thereby prepared. LDH membranes were formed on the opposite surfaces of the porous substrate. In order to use the composite material as a separator, the LDH membrane on one surface of the porous substrate was mechanically removed.

### (5) Evaluations

### (5a) Identification of Membrane Sample

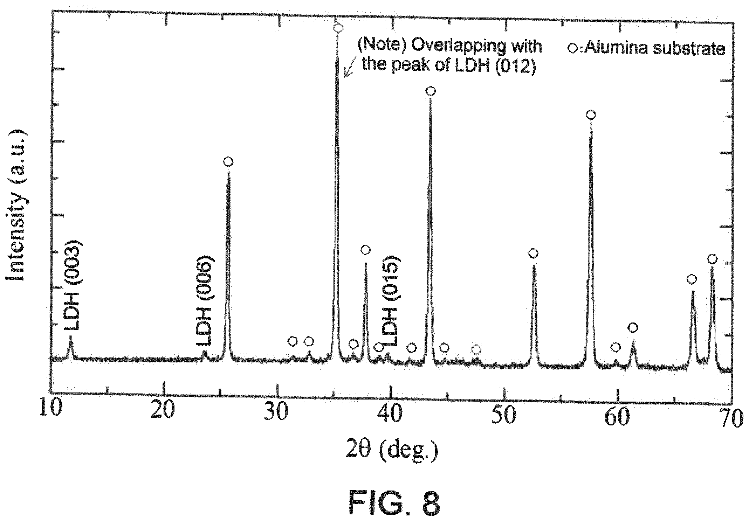

A crystalline phase of a membrane sample was analyzed with an X-ray diffractometer (RINT-TTR III, manufactured by Rigaku Corporation) at a voltage of 50 kV, a current of 300 mA, and a measuring range of 10° to 70°. The resultant XRD profile is illustrated in Fig. 8. The XRD profile was compared with the diffraction peaks of a layered double hydroxide (or a hydrotalcite compound) described in JCPDS card No. 35-0964 for identification of the membrane sample. The membrane sample was identified as a layered double hydroxide (LDH, or a hydrotalcite compound). As shown in the XRD profile of Fig. 8, peaks derived from alumina in the porous substrate on which the membrane sample was formed (i.e., the peaks marked with a circle) were also observed.

### (5b) Observation of Microstructure

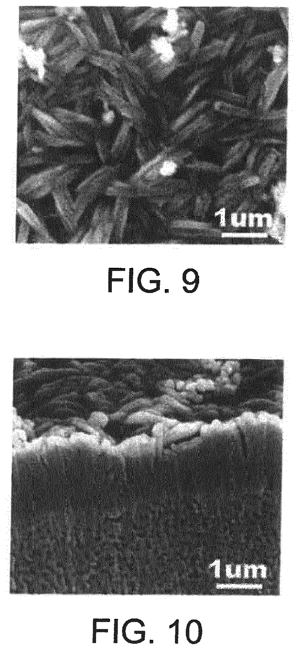

The surface microstructure of the membrane sample was observed with a scanning electron microscope (SEM; JSM-6610LV, manufactured by JEOL Ltd.) at an acceleration voltage of 10 to 20 kV. Fig. 9 illustrates the resultant SEM image (i.e., a secondary electron image) of the surface microstructure of the membrane sample.

A cross-section of the composite material sample was subjected to CP polishing, and the microstructure of the polished cross-section was observed with a scanning electron microscope (SEM) at an acceleration voltage of 10 to 20 kV. Fig. 10 illustrates the resultant SEM image of the microstructure of the polished cross-section of the composite material sample.

### (5c) Measurement of Porosity

The porosity at the surface of the membrane sample was determined by a method involving image processing. Specifically, the porosity was determined as follows: 1) a scanning electron microscopic (SEM) image of the surface microstructure of the membrane was taken with a scanning electron microscope (SEM; JSM-6610LV, manufactured by JEOL Ltd.) (magnification: 10,000 or more) at an acceleration voltage of 10 to 20 kV; 2) the grayscale SEM image was read with image analysis software, such as Photoshop (manufactured by Adobe); 3) a monochromatic binary image was prepared by histogram thresholding with tools named [image], [color compensation], and [binarization] in this order; and 4) the porosity (%) was determined by dividing the number of pixels of the black areas by the number of all the pixels of the image. The porosity was determined over a 6 µm × 6 µm area of the surface of the membrane. The porosity was 19.0%. This porosity was used to calculate the density D (hereinafter referred to as "membrane surface density") of the surface of the membrane by the expression: D = 100% - (the porosity at the surface of the membrane). The density D was 81.0%.

The porosity at the polished cross-section of the membrane sample was also determined. The porosity was determined as in the above procedure except for taking an electron microscopic (SEM) image of the polished cross-section along the thickness of the membrane at a magnification of 10,000 or more (through the above procedure (5b)). The determination of the porosity was performed on the cross-section of the membrane portion in the oriented membrane sample. The porosity at the polished cross-section of the membrane sample was 3.5% on average (i.e., the average porosity of three polished cross-sections). The results demonstrate a significantly high density of the membrane formed on the porous substrate.

### (5d) Density Evaluation Test I

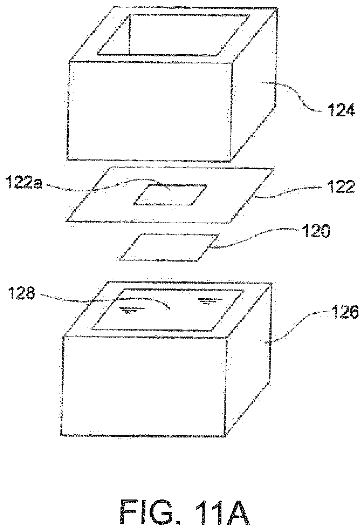

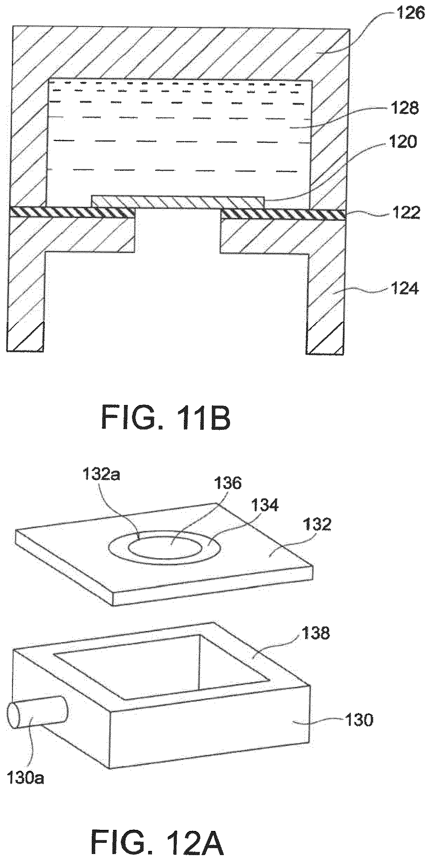

A density evaluation test was performed on the membrane sample for determining whether the sample has high density and thus water impermeability. With reference to Fig. 11A, a silicone rubber 122 having a central opening 122a (0.5 cm × 0.5 cm) was bonded to the membrane sample of composite material sample 120 prepared in (1) above (cut into a piece of 1 cm × 1 cm), and the resultant laminate was disposed between two acrylic units 124 and 126 and bonded to these acrylic units. The acrylic unit 124 disposed on the silicone rubber 122 has no bottom, and thus the silicone rubber 122 is bonded to the acrylic unit 124 such that the opening 122a is exposed. The acrylic unit 126 disposed on the porous substrate side in view of composite material sample 120 has a bottom and contains ion-exchange water 128. In this case, Al and/or Mg may be dissolved in the ion-exchange water. Thus, these components are arranged to form an assembly such that the ion-exchange water 128 comes into contact with the porous substrate of composite material sample 120 if the assembly is inverted upside down. After formation of the assembly, the total weight thereof was measured. It goes without saying that the unit 126 has a closed vent (not shown) and the vent is opened after inversion of the assembly. As illustrated in Fig. 11B, the assembly was inverted and left for one week at 25°C, and then the total weight thereof was measured again. Before measurement of the weight of the assembly, water droplets on the inner side(s) of the acrylic unit 124 were wiped off, if any. The density of the membrane sample was evaluated on the basis of the difference between the total weights of the assembly before and after the inversion. No change in weight of the ion-exchange water was observed even after the one-week test at 25°C. The results demonstrate that the membrane sample (i.e., functional membrane) exhibits high density and thus water impermeability.

### (5e) Density Evaluation Test II

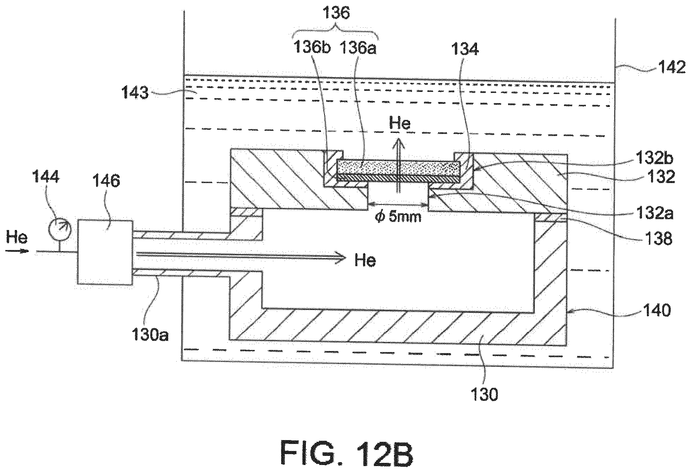

A density evaluation test was performed on the membrane sample for determining whether the sample has high density and thus gas impermeability. As illustrated in Figs. 12A and 12B, an acrylic container 130 and an alumina jig 132 were provided. The container 130 has no lid, and the jig 132 has a shape and a size such that it serves as a lid for the container 130. The acrylic container 130 has a gas inlet 130a for feeding a gas into the container 130. The alumina jig 132 has an opening 132a having a diameter of 5 mm, and a dent 132b provided around the opening 132a for supporting the membrane sample. An epoxy adhesive 134 was applied to the dent 132b of the alumina jig 132, and a membrane sample 136b of a composite material sample 136 was placed on the dent 132b and gas- and liquid-tightly bonded to the alumina jig 132. The alumina jig 132 provided with the composite material sample 136 was gas- and liquid-tightly bonded to the upper edge of the acrylic container 130 with a silicone adhesive 138 so as to completely cover the opening of the acrylic container 130, to prepare a hermetic container 140 for evaluation. The hermetic container 140 was placed in a water bath 142, and the gas inlet 130a of the acrylic container 130 was connected to a pressure gauge 144 and a flowmeter 146 so as to allow helium gas to be fed into the acrylic container 130. Water 143 was poured into the water bath 142 such that the hermetic container 140 was completely submerged in the water. The hermetic container 140 was ensured to have gas tightness and liquid tightness. The membrane sample 136b of the composite material sample 136 was exposed to the inner space of the hermetic container 140, and the porous substrate 136a of the composite material sample 136 was in contact with the water in the water bath 142. Helium gas was fed into the hermetic container 140 through the gas inlet 130a of the acrylic container 130. The pressure gauge 144 and the flowmeter 146 were monitored to achieve a differential pressure of 0.5 atm at the membrane sample 136b (i.e., the pressure applied to the surface in contact with helium gas was higher by 0.5 atm than water pressure applied to the opposite surface), to determine the presence of helium gas bubbles in the water caused by permeation of helium gas through the composite material sample 136. No helium gas bubbles were observed. The results demonstrate that the membrane sample 136b has high density and thus gas impermeability.

### Example 2: Production of Zinc-Air Secondary Battery

### (1) Preparation of Separator Provided with Porous Substrate

A separator provided with a porous substrate (hereinafter referred to simply as "separator") (i.e., LDH membrane on alumina substrate) was prepared as in Example 1

### (2) Preparation of Air Electrode Layer

Particulate α-MnO₂ serving as an air electrode catalyst was prepared as follows: Mn(SO₄)·5H₂O and KMnO₄ were mixed in a molar ratio of 5:13 and dissolved in deionized water. The resultant mixture was poured into a stainless steel hermetic container lined with Teflon (registered trademark) and subjected to hydrothermal synthesis at 140°C for two hours. The precipitate obtained through the hydrothermal synthesis was filtered, washed with distilled water, and then dried at 80°C for six hours, to prepare particulate α-MnO₂.

A particulate layered double hydroxide (hereinafter referred to as "particulate LDH") serving as a hydroxide-ion-conductive material was prepared as follows: Ni(NP₃)₂·6H₂O and Fe(NO₃)₃·9H₂O were mixed (molar ratio of Ni:Fe = 3:1) and dissolved in deionized water. The resultant mixture was added dropwise to a 0.3M Na₂CO₃ solution at 70°C with agitation. The pH of the mixture was adjusted to 10 by addition of a 2M NaOH solution, and the mixture was maintained at 70°C for 24 hours. The precipitate produced in the mixture was filtered, washed with distilled water, and then dried at 80°C, to prepare powdery LDH.

The particulate α-MnO₂, the particulate LDH, and carbon black (VXC72, manufactured by Cabot Corporation) serving as an electron conductive material were weighed in predetermined proportions and then wet-mixed in the presence of ethanol solvent. The resultant mixture was dried at 70°C and then pulverized. The resultant powder was mixed with a binder (PTFE, EC-TEF-500ML, manufactured by ElectroChem) and water (1 mass% relative to the air electrode) to be fibrillated. The resultant fibrillary mixture was press-bonded to a collector (carbon cloth, EC-CC1-060T, manufactured by ElectroChem) into a sheet having a thickness of 50 µm, to prepare a laminate of an air electrode layer on the collector. The resultant air electrode layer contained the electron conductive phase (carbon black) in an amount of 20 vol.%, the catalyst layer (particulate α-MnO₂) in an amount of 5 vol.%, the hydroxide-ion-conductive phase (particulate LDH) in an amount of 70 vol.%, and the binder phase (PTFE) in an amount of 5 vol.%.

### (3) Preparation of Air Electrode with Separator

An anion-exchange membrane (NEOSEPTA AHA, manufactured by ASTOM Corporation) was immersed in a 1M aqueous NaOH solution overnight. The anion-exchange membrane, serving as an intermediate layer, is disposed on the LDH membrane (separator), to prepare a laminate of the separator on the intermediate layer. The intermediate layer has a thickness of 30 µm. The above-prepared air electrode layer/collector laminate is press-bonded to the separator/intermediate layer laminate such that the air electrode layer is in contact with the intermediate layer, to prepare an air electrode with the separator.

### (4) Preparation of Negative Electrode Plate

A mixture of powdery zinc oxide (80 parts by weight), powdery zinc (20 parts by weight), and particulate polytetrafluoroethylene (3 parts by weight) is applied onto a collector composed of punched copper sheet, to prepare a negative electrode plate having a porosity of about 50% and a region coated with the active material. An edge portion of the negative electrode plate is not coated with the negative-electrode active material for providing an extra space in the battery.

### (5) Preparation of Third Electrode

A platinum paste is applied to a nickel mesh collector to prepare a third electrode.

### (6) Assembly of Battery

The air electrode with the separator, the negative electrode plate, and the third electrode are assembled into a vertical zinc-air secondary battery illustrated in Fig. 1 through the procedure described below. A rectangular parallelepiped container composed of ABS resin and having no lid (hereinafter referred to as "resin container") is provided horizontally such that the opening faces upward. The negative electrode plate is disposed on the bottom of the resin container such that the surface coated with the negative-electrode active material faces upward. The negative-electrode collector is in contact with the bottom of the resin container, and one end of the negative-electrode collector is connected to an external terminal penetrating through the side of the resin container. The third electrode is disposed on the inner wall of the resin container at a position remote from the negative electrode active material (i.e., a position that is not in contact with the negative electrode and is not involved in the charge/discharge reaction), and a non-woven separator is disposed to come into contact with the third electrode. The opening of the resin container is covered with the air electrode with the separator such that the air electrode is exposed to the outside. In this case, a commercially available adhesive is applied to the periphery of the opening such that the opening is gas- and liquid-tightly sealed with the air electrode. A6 mol/L aqueous KOH solution, serving as an electrolytic solution, is injected into the resin container through a small inlet provided near the top of the resin container. Thus, the separator is in contact with the electrolytic solution, and the electrolytic solution is always in contact with the third electrode because of the liquid-retaining ability of the non-woven separator despite a variation in amount of the electrolytic solution. In order to prepare the battery in a full charge state, the amount of the electrolytic solution injected into the resin container is adjusted such that the portion coated with the negative-electrode active material, when disposed vertically, is immersed in the solution, and the portion not coated with the active material, when disposed vertically, is not immersed in the solution for providing an extra space. Thus, the resin container is designed to provide an extra space that can meet an increase in amount of the electrolytic solution during a discharge mode. The inlet of the resin container is then sealed. The space defined by the resin container and the separator is gas- and liquid-tightly sealed. The third electrode is then connected to the collector layer of the air electrode via an external circuit. The resultant battery, which is horizontally arranged, is rotated by 90° such that the extra space and the third electrode are disposed upward, to produce a vertical zinc-air secondary battery as illustrated in Fig. 1.

As described above, the separator exhibits high density and thus water impermeability and gas impermeability. This configuration of the zinc-air secondary battery physically inhibits the penetration of dendritic zinc (which may be formed during a charge mode of the battery) through the separator, to prevent the short circuit between the positive and negative electrodes. This configuration also inhibits the intrusion of carbon dioxide contained in air, to prevent precipitation of an alkaline carbonate (caused by carbon dioxide) in the electrolytic solution. In addition, hydrogen gas generated from the negative electrode 14 by the side reaction comes into contact with the third electrode 18 to produce water through the above-described reactions. Thus, the zinc-air secondary battery has a configuration suitable for preventing both the short circuit caused by dendritic zinc and the intrusion of carbon dioxide, and can address problems caused by the generation of hydrogen gas; i.e., the zinc-air secondary battery exhibits high reliability.

## Claims

1. A zinc-air secondary battery (10) comprising:
an air electrode (12) serving as a positive electrode;
a negative electrode (14) comprising zinc, a zinc alloy, and/or a zinc compound;
an aqueous electrolytic solution (16), the negative electrode (14) being immersed in the aqueous electrolytic solution (16);
a container (26) having an opening (26a) and accommodating the negative electrode (14) and the electrolytic solution (16), wherein the container (26) is composed of a resin; and
a separator (20) disposed to cover the opening (26a) and having hydroxide ion conductivity, water impermeability, and gas impermeability, the separator (20) being in contact with the electrolytic solution (16) and defining a hermetic space with the container (26) such that the air electrode (12) is separated from the electrolytic solution (16) by the separator (20) through which hydroxide ions pass,
wherein the hermetic space has an extra space (27) having a volume that meets a variation in amount of water in association with reaction at the negative electrode (14) during charge and discharge of the battery (10), and
wherein the separator (20) comprises an inorganic solid electrolyte.

2. The zinc-air secondary battery (10) according to claim 1, wherein the inorganic solid electrolyte has a relative density of 90% or more.

3. The zinc-air secondary battery (10) according to claim 1 or 2, wherein the inorganic solid electrolyte comprises a layered double hydroxide having a basic composition represented by the formula:
M²⁺₁₋ₓM³⁺ₓ(OH)₂Aⁿ⁻_{x/n}·mH₂O
where M²⁺ represents a divalent cation, M³⁺ represents a trivalent cation, Aⁿ⁻ represents an n-valent anion, n is an integer of 1 or more, x is 0.1 to 0.4, and m is 0 or more.

4. The zinc-air secondary battery (10) according to claim 3, wherein M²⁺ comprises Mg²⁺, M³⁺ comprises Al³⁺, and Aⁿ⁻ comprises OH⁻ and/or CO₃²⁻ in the formula.

5. The zinc-air secondary battery (10) according to any one of claims 1 to 4, wherein the inorganic solid electrolyte is in a plate, membrane, or layer form.

6. The zinc-air secondary battery (10) according to any one of claims 1 to 5, further comprising a porous substrate (28) on either or both of the surfaces of the separator (20).

7. The zinc-air secondary battery (10) according to claim 6, wherein the inorganic solid electrolyte is in a membrane or layer form, and is disposed on or in the porous substrate (28).

8. The zinc-air secondary battery (10) according to claim 6 or 7, wherein the inorganic solid electrolyte comprises a layered double hydroxide composed of an aggregation of platy particles, and the platy particles are oriented such that the tabular faces of the platy particles are perpendicular to or oblique to a surface of the porous substrate (28).

## Patentansprüche

1. Zink-Luft-Sekundärbatterie (10), umfassend:
eine Luft-Elektrode (12), welche als positive Elektrode dient;
eine negative Elektrode (14), welche Zink, eine Zinklegierung und/oder eine Zinkverbindung umfasst;
eine wässrige Elektrolytlösung (16), wobei die negative Elektrode (14) in die wässrige Elektrolytlösung (16) eingetaucht ist;
einen Behälter (26), welcher eine Öffnung (26a) aufweist und die negative Elektrode (14) und die Elektrolytlösung (16) aufnimmt, wobei der Behälter (26) aus einem Harz gebildet ist; und
einen Separator (20), welcher derart angeordnet ist, dass er die Öffnung (26a) bedeckt, und Hydroxidionenleitfähigkeit, Wasserundurchlässigkeit und Gasundurchlässigkeit aufweist, wobei der Separator (20) in Kontakt mit der Elektrolytlösung (16) steht und einen hermetischen Raum mit dem Behälter (26) dergestalt definiert, dass die Luft-Elektrode (12) von der Elektrolytlösung (16) durch den Separator (20), durch welchen Hydroxidionen passieren, getrennt ist,
wobei der hermetische Raum einen zusätzlichen Raum (27) mit einem Volumen, das einer Veränderung der Wassermenge in Verbindung mit einer Umsetzung an der negativen Elektrode (14) während des Ladens und Entladens der Batterie (10) genügt, aufweist, und
wobei der Separator (20) einen anorganischen Feststoffelektrolyten umfasst.

2. Zink-Luft-Sekundärbatterie (10) nach Anspruch 1, wobei der anorganische Feststoffelektrolyt eine relative Dichte von 90% oder mehr aufweist.

3. Zink-Luft-Sekundärbatterie (10) nach Anspruch 1 oder 2, wobei der anorganische Feststoffelektrolyt ein geschichtetes Doppelhydroxid mit einer Grundzusammensetzung umfasst, dargestellt durch die Formel:
M²⁺₁₋ₓM³⁺ₓ(OH)₂Aⁿ⁻_{x/n}·mH₂O
worin M²⁺ ein zweiwertiges Kation darstellt, M³⁺ ein dreiwertiges Kation darstellt, Aⁿ⁻ ein n-wertiges Anion darstellt, n eine ganze Zahl von 1 oder mehr ist, x 0,1 bis 0,4 ist und m 0 oder mehr ist.

4. Zink-Luft-Sekundärbatterie (10) nach Anspruch 3, wobei in der Formel M²⁺ Mg²⁺ umfasst, M³⁺ Al³⁺ umfasst und Aⁿ⁻ OH⁻ und/oder CO₃²⁻ umfasst.

5. Zink-Luft-Sekundärbatterie (10) nach einem der Ansprüche 1 bis 4, wobei der anorganische Feststoffelektrolyt in einer Platten-, Membran- oder Schichtform vorliegt.

6. Zink-Luft-Sekundärbatterie (10) nach einem der Ansprüche 1 bis 5, weiter umfassend ein poröses Substrat (28) auf einer oder beiden der Oberflächen des Separators (20).

7. Zink-Luft-Sekundärbatterie (10) nach Anspruch 6, wobei der anorganische Feststoffelektrolyt in einer Membran- oder Schichtform vorliegt, und auf oder in dem porösen Substrat (28) angeordnet ist.

8. Zink-Luft-Sekundärbatterie (10) nach Anspruch 6 oder 7, wobei der anorganische Feststoffelektrolyt ein geschichtetes Doppelhydroxid, welches aus einer Aggregation von plattenförmigen Teilchen gebildet ist, umfasst, und die plattenförmigen Teilchen dergestalt orientiert sind, dass die tafelförmigen Flächen der plattenförmigen Teilchen senkrecht oder schräg zu einer Oberfläche des porösen Substrats (28) vorliegen.

## Revendications

1. Batterie secondaire zinc-air (10), comprenant :
une électrode à air (12) en guise d'électrode positive;
une électrode négative (14) comprenant du zinc, un alliage de zinc, et/ou un composé de zinc;
une solution électrolytique aqueuse (16), l'électrode négative (14) étant immergée dans la solution électrolytique aqueuse (16);
un conteneur (26) présentant un orifice (26a) et logeant l'électrode négative (14) et la solution électrolytique (16), dans laquelle le conteneur (26) est composé d'une résine ; et
un séparateur (20) disposé pour recouvrir l'orifice (26a) et présentant une conductivité aux ions hydroxyde, une imperméabilité à l'eau et une imperméabilité aux gaz, le séparateur (20) étant en contact avec la solution électrolytique (16) et définissant un espace hermétique avec le conteneur (26) de telle sorte que l'électrode à air (12) est séparée de la solution électrolytique (16) par le séparateur (20) à travers lequel les ions hydroxyde passent,
dans laquelle l'espace hermétique présente un espace supplémentaire (27) avec un volume qui tient compte d'une variation de la quantité d'eau associée à la réaction sur l'électrode négative (14) pendant la charge et la décharge de la batterie (10), et dans laquelle le séparateur (20) comprend un électrolyte solide inorganique.

2. Batterie secondaire zinc-air (10) selon la revendication 1, dans laquelle l'électrolyte solide inorganique présente une densité relative de 90% ou plus.

3. Batterie secondaire zinc-air (10) selon la revendication 1 ou 2, dans laquelle l'électrolyte solide inorganique comprend un hydroxyde double stratifié présentant une composition basique représentée par la formule :
M²⁺₁₋ₓM³⁺ₓ(OH)₂Aⁿ⁻_{x/n}·mH₂O
dans laquelle M²⁺ représente un cation divalent, M³⁺ représente un cation trivalent, Aⁿ⁻ représente un anion n-valent, n est un entier de 1 ou plus, x va de 0,1 à 0,4 et m vaut 0 ou plus.

4. Batterie secondaire zinc-air (10) selon la revendication 3, dans laquelle M²⁺ comprend du Mg²⁺, M³⁺ comprend de l'Al³⁺ et Aⁿ⁻ comprend de l'OH⁻ et/ou du CO₃²⁻ dans la formule.

5. Batterie secondaire zinc-air (10) selon l'une quelconque des revendications 1 à 4, dans laquelle l'électrolyte solide inorganique est sous forme de plaque, de membrane ou de couche.

6. Batterie secondaire zinc-air (10) selon l'une quelconque des revendications 1 à 5, comprenant en outre un substrat poreux (28) sur l'une ou sur les deux surfaces du séparateur (20).

7. Batterie secondaire zinc-air (10) selon la revendication 6, dans laquelle l'électrolyte solide inorganique est sous la forme d'une membrane ou d'une couche et est disposé sur ou dans le substrat poreux (28).

8. Batterie secondaire zinc-air (10) selon la revendication 6 ou 7, dans laquelle l'électrolyte solide inorganique comprend un hydroxyde double stratifié composé d'un agrégat de particules lamellaires et les particules lamellaires sont orientées de sorte que les faces tabulaires des particules lamellaires sont perpendiculaires ou obliques par rapport à une surface du substrat poreux (28).
